(19) **Europäisches Patentamt / European Patent Office / Office européen des brevets**

(11) **EP 1 182 439 B1**

(12) # EUROPEAN PATENT SPECIFICATION

(45) Date of publication and mention
of the grant of the patent:
**13.04.2016 Bulletin 2016/15**

(51) Int Cl.:
*G01K 17/04* *(2006.01)*     *G01N 25/48* *(2006.01)*
*G01K 17/00* *(2006.01)*

(21) Application number: **01120173.8**

(22) Date of filing: **22.08.2001**

(54) **Power compensation differential scanning calorimeter**

Differentialabtastkalorimeter mit Leistungskompensation

Calorimètre différentiel à balayage du type à compensation de puissance

(84) Designated Contracting States:
**BE CH DE FR GB LI NL**

(30) Priority: **23.08.2000 US 643870**
**23.08.2000 US 643869**
**26.01.2001 US 769313**

(43) Date of publication of application:
**27.02.2002 Bulletin 2002/09**

(73) Proprietor: **TA Instruments-Waters LLC**
**New Castle,**
**Delaware 19720 (US)**

(72) Inventor: **Danley, Robert L.**
**Collingswood, NJ 08107 (US)**

(74) Representative: **Harding, Andrew Philip et al**
**Forresters**
**Skygarden**
**Erika-Mann-Strasse 11**
**80636 München (DE)**

(56) References cited:
**EP-A- 0 701 122     WO-A-95/33199**
**DE-A- 3 049 105     US-A- 4 530 608**
**US-A- 4 614 721     US-A- 5 224 775**
**US-A- 5 439 291     US-A- 5 599 104**
**US-A- 5 711 604**

**Description**

The present application claims priority from the filing dates of U.S. Patent Application Serial No. 09/643,870, filed August 23, 2000, and U.S. Patent Application Serial No. 09/643,869, filed August 23, 2000 and U.S. Patent Application Serial No. 09/769,313, filed January 26, 2001.

**BACKGROUND**

**Field of Invention**

The present invention relates to a power compensation differential scanning calorimeter.

**Background of the Invention**

Differential scanning calorimeters (DSCs) measure the flow of heat to a sample as the sample temperature is varied in a controlled manner and to be analyzed as a function of time and temperature. DSCs are described in "Differential Scanning Calorimetry: an Introduction for Practitioners," G. Höhne, W. Hemminger and H. J. Flammersheim (Springer-Verlag: 1996) and "Thermal Analysis", Bernhard Wunderlich (Academic Press, 1990).

There are two basic types of DSC, heat flux and power compensation. Heat flux DSCs include a sensor to measure heat flow to a sample to be analyzed. The sensor has a sample position and a reference position. The sensor is installed in an oven whose temperature is varied dynamically according to a desired temperature program. As the oven is heated or cooled, the temperature difference between the sample and reference positions of the sensor is measured. This temperature difference is assumed to be proportional to the heat flow to the sample.

Power compensation DSCs are a specific type of DSC that measure the difference in power supplied to the sample compared to the reference throughout the analysis. Power compensation DSCs are described in "A Differential Scanning calorimeter for Quantitative Differential Thermal Analysis", E. S. Watson and M.J. O'Neill, Analytical Chemestry Vol. 36, No 7, pp. 1233-1238 (June 1964), "The Analysis of a Temperature-Controlled Scanning Calorimeter", M.J. O'Neill, Analytical Chemistry Vol. 36, No 7, pp. 1238-1245 (June 1964), and in the U.S. Patent No. 3,263,484 to Watson and O'Neill and U.S. Patent No. 3,732,722 to Norem, O'Neill, and Richmond.

Power compensation DSCs include a sample and a reference holder installed in a constant temperature enclosure. Each of the holders has a heater and a temperature sensor. The average of the sample and reference holder temperatures is used to control temperature, which follows the desired temperature program. In addition, differential power proportional to the temperature difference between the holders is added to the average power to the sample holder and subtracted from the average power to the reference holder in an effort to reduce the temperature difference between sample and reference holders to zero.. The differential power is assumed to be proportional to the sample heat flow and is obtained by measuring the temperature difference between the sample and reference holder. In commercial power compensation DSCs, the difference between sample and reference temperature is generally not zero because a proportional controller is used to control the differential power.

A sample to be analyzed is loaded into a pan and placed on the sample position of the DSC. An inert reference material may be loaded into a pan and placed on the reference position of the DSC although usually the reference pan is empty. The temperature program for conventional DSC typically includes combinations of linear temperature ramps and constant temperature segments. Modulated DSC uses a temperature program in which periodic temperature oscillations are superposed on linear ramps and isothermal segments. The experimental result is the sample heat flow versus temperature or time. The heat flow signal is the result of heat flow to or from the sample due to its specific heat and as a result of transitions occurring in the sample.

During the dynamic portion of the DSC experiment, a temperature difference is created between the sample and reference positions of the DSC. In heat flux DSC the temperature difference results from the combination of three differential heat flows. The difference between the sample and reference heat flow, the difference between sample and reference sensor heat flow and the difference between sample and reference pan heat flow. In power compensation DSC the temperature difference results from the combination of three differential heat flows plus the differential power supplied to the sample holders. The differential heat flows are: the difference between the sample and reference heat flow, the difference between sample and reference holder heat flow and the difference between sample and reference pan heat flow. The heat flow difference between the sample and reference consists of heat flow due to the heat capacity difference between the sample and reference, the heat flow of a transition, or the difference in heating rate that occurs during a MDSC experiment. The heat flow difference between the sample and reference sections of the DSC is the result of thermal resistance and capacitance imbalances in the sensor or between the holders and the difference in heating rate that occurs between the sample and reference sections of the DSC during a transition or during a MDSC experiment. Similarly, the heat flow difference between the sample and reference pans is the result of mass differences between the pans and the difference in heating rate that occurs during a sample transition or during a MDSC experiment.

In conventional heat flux DSCs the sensor imbalance and pan imbalance are assumed to be insignificant and the differences in heating rates are ignored. In conventional power compensation DSC the holder imbalance and pan imbalance are assumed to be insignificant and the differences in heating rates are ignored. When the balance assumptions are satisfied and the sample heating rate is the same as the programmed heating rate, the temperature difference is proportional to the sample heat flow and the differential temperature gives an accurate measure of the sample heat flow. The sample heat flow is only proportional to the measured temperature difference between sample and reference when the heating rate of the sample and reference are identical, the sensor is perfectly symmetrical, and the pan masses are identical. Proportionality of sample heat flow to temperature difference for a balanced sensor and pans occurs only during portions of the experiment when the instrument is operating at a constant heating rate, the sample is changing temperature at the same rate as the instrument and there are no transitions occurring in the sample.

During Modulated DSC experiments, the heating rates of the sample and reference are generally not the same and the difference between measured sample and reference temperatures is not proportional to the sample heat flow. Thus, the sample heat flow from a conventional DSC is not the actual sample heat flow, but includes the effects of imbalances and differences in heating rates; in other words the DSC sample heat flow measurement is smeared. For many DSC experiments, the smeared sample heat flow is a sufficiently accurate result. For example, when the desired experimental result is the total energy of the transition, like the heat of fusion of a melt, the total peak area is integrated over a suitable baseline and the result from a conventional DSC is sufficiently accurate. If however, partial integration of the peak area is required (for example in the study of reaction kinetics), the smeared sample heat flow of conventional DSC cannot be used. Another example of when the conventional DSC result is inadequate is when two or more transitions in a sample occur within a small temperature interval. In that case, the transitions may be poorly separated because of the smearing effects. The improvement in resolution obtained by using the present method greatly improves the separation of closely spaced transitions. In any case, the heat flow signal from conventional DSC does not accurately portray the sample heat flow during a transition.

During a transition, the heat flow to the sample increases or decreases from the pre-transition value depending upon whether the transition is exothermic or endothermic and whether the DSC is being heated or cooled. The change in sample heat flow causes the heating rate of the sample to be different from that of the DSC and as a consequence, the sample pan and sensor heating rates become different from the programmed heating rate.

US 6 431 747 discloses a heat flux DSD that uses a four term heat flow equation to account for sensor imbalances and differences in heating rate between the sample and reference sections of the sensor. Heat flow results from that invention show improved dynamic response and hence improved resolution along with improvements in the empty DSC cell heat flow, However, the heat flow signal obtained from the practice also still includes the effects of the sample pans.

US 5439291 discloses a method and apparatus for AC differential thermal analysis.

US 5711604 discloses a method for measuring the coefficient of heat conductivity of a sample.

Objects of the Invention

It is the object of the present invention to provide a power compensation DSC that uses two differential temperature measurements, one absolute temperature measurement and a differential power measurement, so that a five term heat flow equation may be used to calculate a more complete and correct measure of the heat flow to the sample.

SUMMARY OF THE INVENTION

The present invention is a power compensation differential scanning calorimeter according to claim 1 that uses two differential temperature measurements and a five term heat flow equation to model the instrument. Differential scanning calorimeters employing this invention will have empty DSC cell heat flow that is much closer to zero (leading to improved baselines) and will have substantially improved resolution over conventional instruments.

A sample to be analyzed and a reference are heated (or cooled) in two independent sample holders. Each of the sample holders incorporates a detector to measure the temperature of the sample holder and a heating element to heat the sample holder. The sample holders are heated (or cooled) so that the average temperature of the sample holders follows the desired temperature program. Because of the presence of a sample, the temperature of the two sample holders should diverge as the average temperature of the sample holders is increased (or decreased). Typically, the sample would heat (or cool) more slowly and the reference would heat (or cool) more rapidly than the programmed heating (or cooling) rate. To prevent this from occurring, a proportional controller regulates the power supplied to the sample holder and to the reference holder. The power supplied to the sample holder is increased (or decreased) by a small amount and the power supplied to the reference is decreased (or increased) by the same amount so that the temperature difference between the sample and reference is controlled. This small differential power is approximately equal to the heat flow to the sample and is the measured heat flow.

BRIEF DESCRIPTION OF THE DRAWINGS

Figure 1 is a thermal network model of an embodiment of the present invention, i. e. of a power compensation differential scanning calorimeter.

Figure 2 is a schematic diagram of the power compensation DSC o the present invention.

Figure 3 is a comparison of the heat flow in a power compensation DSC measured according to the present invention (solid line) and according to the prior art (dotted line).

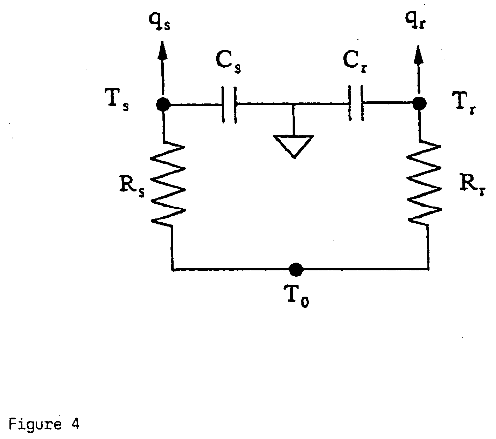

Figure 4 is a thermal network model of a heat flux differential scanning calorimeter, which is not part of the present invention.

Figure 5 is a plot showing a comparison of the heat flow obtained using the present method to the heat flow obtained using conventional DSCs, and to the heat flow obtained using the invention.

DETAILED DESCRIPTION OF THE PREFERRED EMBODIMENTS OF THE INVENTION

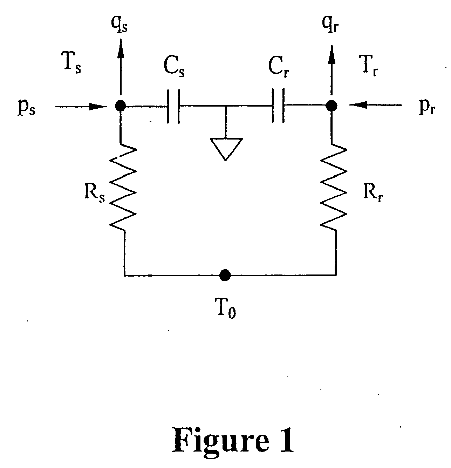

Figure 1 shows a thermal network model that may be used to represent certain confgurations of power compensation DSCs according to the invention. $T_o$ is the temperature of the isothermal enclosure surrounding the sample holders, $T_5$ is the temperature of the sample holder and $T_r$ is the temperature of the reference holder. $R_s$ and $R_r$ represent the thermal resistance of the sample and reference portions of calorimeter, respectively. $C_s$ and $C_r$ represent the thermal capacitance of the sample and reference portions of the calorimeter, respectively. Thermal capacitance is the product of mass and specific heat and is a measure of the heat storage capacity of a body. The heat flow to the sample and the heat flow to the reference and their pans are represented by $q_s$ and $q_r$, respectively. The power supplied to the sample and the power supplied to the reference holders are represented by $p_s$ and $p_r$, respectively. During the execution of a thermal program the temperature of the isothermal enclosure $T_o$ is constant. Sample and reference powers $p_s$ and $p_r$ are applied to the sample and reference holders to maintain the average heating rate and to control the difference in temperature between the sample and reference holders. Performing a heat balance on the sample holder yields:

$$q_s = \frac{T_0 - T_s}{R_s} + p_s - C_s \cdot \frac{dT_s}{d\tau} \qquad (1)$$

Similarly, a heat balance on the reference holder gives,

$$q_r = \frac{T_0 - T_r}{R_r} + p_r - C_r \cdot \frac{dT_r}{d\tau} \qquad (2)$$

The desired quantity is the difference between the sample and reference heat flows:

$$q = q_s - q_r \qquad (3)$$

Substituting for $q_s$ and $q_r$ yields:

$$q = p_s - p_r + \frac{T_0 - T_s}{R_s} - \frac{T_0 - T_r}{R_r} - C_s \cdot \frac{dT_s}{d\tau} + C_r \cdot \frac{dT_r}{d\tau} \qquad (4)$$

Substitute the following expressions into the heat flow equation:

$$\Delta T = T_s - T_r \qquad \Delta T_0 = T_0 - T_s \qquad \Delta p = p_s - p_r \qquad (5)$$

The result is the power compensation DSC heat flow equation:

$$q = \Delta p + \Delta T_0 \cdot \left( \frac{R_r - R_s}{R_r \cdot R_s} \right) - \frac{\Delta T}{R_r} + (C_r - C_s) \cdot \frac{dT_s}{d_t} - C_r \cdot \frac{d\Delta T}{d_t} \tag{6}$$

This equation has five terms. The first term is the difference in power supplied to the sample position versus the power supplied to the reference position. The second term accounts for differences between the thermal resistances of the sample and reference holders. The third term accounts for the heat flow that results from the difference in temperature between the sample and reference. The fourth term is the heat flow resulting from imbalances in thermal capacitance between the sample and reference holders. The fifth term reflects heat flow resulting from differences in heating rate between the sample and reference holders. In the prior art, this equation is not used; instead a very simplified equation is used:

$$q = K \cdot \Delta T \tag{7}$$

where $K$ is a temperature dependent proportionality factor. This equation does not include the effects of imbalances between the sample and reference holders (the second and fourth terms in the heat flow equation), nor does it include the fifth term which expresses the differences in heating rate between the sample and reference holders. In essence, in the prior art it is assumed that the DSC is perfectly balanced, $i.e.$, that $R_s = R_r$ and that $C_s = C_r$. In reality, because of manufacturing imprecision and the variability of the heat exchange processes between the sample holder and the isothermal enclosure and between the reference holder and the isothermal enclosure, imbalances generally exist. These imbalances contribute to baseline heat flow deviations that may be significant.

The fifth term is generally very nearly equal to zero, except when a transition is occurring in the sample, for instance during a melt. Usually the transition heat flow signal is integrated over a suitable baseline to obtain the total energy of the transition. Because the integral of the fifth term over the transition is zero, it is conventionally ignored in the prior art. However, it may contribute significantly to the shape of the heat flow curve during a translation. Thus, by including the fifth term, the dynamic response of the instrument is improved. Also, as noted by Höhne et. Al., referenced above, this term must be taken into account when a partial integration of the transition peak is performed (for instance when kinetic investigations to determine purity are undertaken). When the fifth term is included, the return to baseline after the completion of a transition is more rapid. Because the resolution of a DSC is its ability to separate transitions that occur in a sample within a small temperature interval, and that ability is determined solely by how quickly the heat flow signal decays after a transition is complete, including the fifth term of the DSC heat flow equation according to the invention, improves the resolution of the DSC by increasing the rate of decay of the heat flow signal after a transition is completed.

Further embodiments of the invention may be arranged as follows.

In a preferred embodiment of the invention, the two differential temperature measurements are the differential temperature $\Delta T_0$ across thermal resistance $R_3$, and the differential temperature $\Delta T$ between the sample and reference holders. The absolute temperature of the sample holder and the power difference between the sample and reference holders are also measured ($i.e.,$ the differential power to the sample with respect to the reference). Additionally, the four thermal parameters, $R_s$, $R_r$, $C_s$ and $C_r$ must be known. The use of two differential temperature measurements allows the use of a heat flow model that includes all five terms of the five term heat flow equation. The heat flow signal that results has improved baseline performance and improved dynamic response. In particular, because the heat flow signal is much greater during a melt, the calorimeter has greater sensitivity during the melt.

Other choices of the two differential temperature measurements are also suitable, as explained below. A method by which the four thermal parameters $C_s$, $C_r$, $R_s$, $R_r$ are determined constitutes heat flow calibration of the DSC.

Heat flow calibration requires two experiments from which the four thermal parameters can be calculated. The first experiment is performed with an empty DSC cell. The DSC program begins with an isothermal temperature segment at a temperature below the lowest temperature of the desired calibration range, followed by a constant heating rate temperature ramp, and ending with an isothermal temperature segment above the highest temperature of the desired calibration range. The heating rate should be the same as the heating rate that is to be used for subsequent experiments. The second calibration experiment is performed with sapphire samples loaded in both the sample and reference holders. The same thermal program is used for the second experiment as was used for the first (empty DSC) experiment. The two calibration experiments and the calculation of the thermal parameters based on the experiments are explained in detail below.

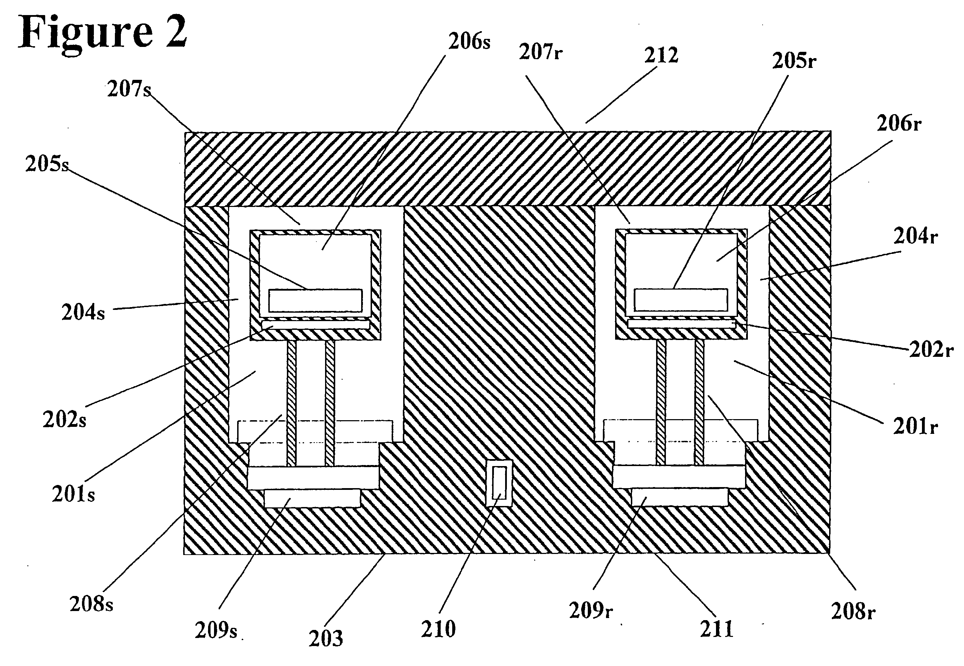

Figure 2 is a schematic diagram of a cross-sectional view of a power compensation DSC cell of the present invention. The DSC cell comprises a sample holder assembly 201s and a reference holder assembly 201r installed in an isothermal enclosure 203. Overall, the sample and reference holder assemblies are manufactured to be as identical as possible. Sample holder 201s has a body 204s in which are embedded a temperature detector 202s, and a heating element (not shown in Figure 2). A sample in a sample pan 205s is inserted in the cavity 206s of the sample holder, which is closed by a lid 207s. The body of the sample holder 204s is supported by thermal resistor 208s, which is attached to flange 209s. The thermal resistor is the principal path for heat exchange between the sample holder and the isothermal enclosure and allows the sample holder to be heated to temperatures much higher than the isothermal enclosure by applying a modest quantity of heater power. Thermal resistor 208s is a tubular member with a small cross-sectional area in the direction normal to heat flow, as compared with its length in the direction of heat flow.

Similarly, reference holder 201r has a body 204r in which are embedded a temperature detector 202r, and a heating element (not shown in Figure 2). Reference pan 205r is inserted in the cavity 206r of reference holder 201r, which is closed by lid 207r. The body of the reference holder 204r is supported by thermal resistor 208r, which is attached to flange 209r. The thermal resistor is the principal path for heat exchange between the reference holder 201r and the isothermal enclosure, and allows the reference holder to be heated to temperatures much higher than the isothermal enclosure by modest heater power. It is a tubular member with a small cross-sectional area in the direction normal to heat flow as compared with its length in the direction of heat flow. A reference material could be placed in a reference pan 205r, which is inserted in the cavity of reference holder 201r, although the usual practice is to omit the reference material and place an empty pan 205r in reference holder 201r.

The isothermal enclosure 203 comprises a body 211 and a removable lid 212 that allows access to the sample and reference holders for loading the sample and reference. Flange 209s of the sample holder is joined to the body 211 of the isothermal enclosure so that heat flows from the sample holder and sample through the thermal resistor 208s to the isothermal body. Isothermal enclosure temperature detector 210 is installed in the body 211 of the isothermal enclosure 203 to measure the isothermal temperature; the difference between this temperature and the temperature of the sample holder is $\Delta T_0$. The isothermal body is cooled by various means, for example a liquid cryogen, mechanical refrigeration, water or air. The isothermal enclosure is constructed of a high thermal conductivity material, typically aluminum, to minimize variation of temperature within the enclosure.

This embodiment of the present invention uses the sample temperature measurement as the only absolute temperature measurement. It also measures the differential temperature between the sample and reference holders, the differential temperature between the sample holder and the isothermal enclosure, and the differential power to the sample with respect to the reference. The differential power to the sample with respect to the reference is measured, for example, by measuring the power to the sample holder and the power to the reference holder separately, and obtaining the difference between the separate measurements. The power to the sample holder and the power to the reference holder can be measured in a number of different ways, for example by instrumentation that measures the voltages and currents to the sample and reference heaters. Thus, this embodiment uses a combination of a single absolute temperature measurement (the sample temperature), two differential temperature measurements (sample/reference and sample/enclosure) and a differential power measurement (sample/reference) to obtain the quantities needed to calculate the differential heat flow to the sample according to the power compensation DSC heat flow equation (equation 6, reproduced here for convenience):

$$ q = \Delta p + \Delta T_0 \cdot \left( \frac{R_r - R_s}{R_r \cdot R_s} \right) - \frac{\Delta T}{R_r} + (C_r - C_s) \cdot \frac{dT_s}{dt} - C_r \cdot \frac{d\Delta T}{dt} \tag{6} $$

It will be recognized that other combinations of a single absolute temperature and two differential temperature measurements may also be used with a five term heat flow equation.

The improvements of the current method can also be obtained using the other configurations. There are three possible choices for the single absolute temperature measurement: the sample holder temperature, the reference holder temperature and the isothermal enclosure temperature. Each of these can be used with any two of the three possible differential temperature measurements to achieve the same results. Thus the sample temperature $T_s$ can be used as the absolute temperature measurement with differential temperature measurements $T_0$-$T_s$ and $T_s$-$T_r$ as in the preferred embodiment, or with $T_0$-$T_s$ and $T_0$-$T_r$ or with $T_s$-$T_r$ and $T_0$-$T_r$. The reference temperature $T_r$ can be used as the absolute temperature measurement with differential temperature measurements $T_s$-$T_r$ and $T_0$-$T_r$ or with $T_0$-$T_r$ and $T_0$-$T_s$ or with $T_s$-$T_r$ and $T_0$-Ts. The base temperature To can be used as the absolute temperature measurement with $T_0$-$T_s$ and $T_s$-$T_r$, or with $T_0$-$T_s$ and $T_0$-$T_r$, or with $T_0$-$T_r$ and $T_s$-$T_r$. Thus, there are eight additional configurations that can give the same information if the five term heat flow equation is rewritten accordingly. All nine of the possible configurations are within the scope of the present invention.

**Method for Determining Thermal Parameters**

To use the five term Power Compensation DSC heat flow equation, the four thermal parameters $C_s$, $C_r$, $R_s$, $R_r$ must be determined. Determination of these parameters constitutes heat flow calibration of the DSC.

Heat flow calibration requires two experiments from which the four thermal parameters can be calculated. The first experiment is performed with an empty DSC cell. The DSC program begins with an isothermal temperature segment at a temperature below the lowest temperature of the desired calibration range, followed by a constant heating rate temperature ramp, and ending with an isothermal temperature segment above the highest temperature of the desired calibration range. The heating rate should be the same that is to be used for subsequent experiments. The second calibration experiment is performed, for example, with sapphire specimens loaded in both the sample and reference holders. Other materials having known thermal properties and no transitions in the temperature range of interest may be used instead of sapphire. The same thermal program is used in the second experiment as was used for the first empty DSC experiment.

Beginning with the heat balance equation for the sample side, the heat flow during the empty DSC experiment is set equal to zero, and the heat balance equation becomes:

$$\frac{\Delta T_{o1}}{R_s} + p_{s1} - C_s \cdot \frac{dT_{s1}}{d_\tau} = 0 \tag{8}$$

The numerical subscript 1 indicates the first calibration experiment. For the second calibration experiment using sapphire specimens, the sample heat flow is set equal to:

$$q_{s2} = m_{s2} \cdot C_{sapph} \cdot \frac{dT_{s2}}{d_\tau} \tag{9}$$

where $m_{s2}$ is the mass of the sapphire sample, $C_{sapph}$ is the known heat capacity of sapphire and the numerical subscript 2 indicates the second calibration experiment. For the second calibration experiment, the heat balance equation becomes:

$$\frac{\Delta T_{o2}}{R_s} + p_{s2} - C_s \cdot \frac{dT_{s2}}{d_\tau} = m_{s2} \cdot C_{sapph} \cdot \frac{dT_{s2}}{d_\tau} \tag{10}$$

Solving these two equations simultaneously for $C_s$ and $R_s$ gives:

$$C_s = \frac{\Delta T_{o1} \cdot \left( m_{s2} \cdot C_{sapph} \cdot \frac{dT_{s2}}{d_\tau} - p_{s2} \right) + \Delta T_{o2} \cdot p_{s1}}{\Delta T_{o2} \cdot \frac{dT_{s1}}{d_\tau} - \Delta T_{o1} \cdot \frac{dT_{s2}}{d_\tau}} \tag{11}$$

$$R_s = \frac{\Delta T_{o2} \cdot \frac{dT_{s1}}{d_\tau} - \Delta T_{o1} \cdot \frac{dT_{s2}}{d_\tau}}{\frac{dT_{s1}}{d_\tau} \cdot \left( m_{s2} \cdot C_{sapph} \cdot \frac{dT_{s2}}{d_\tau} - p_{s2} \right) + \frac{dT_{s2}}{d_\tau} \cdot p_{s1}} \tag{12}$$

Similarly, the heat balance equations for the empty and the sapphire calibration runs on the reference side give:

$$\frac{T_{o1} - T_{r1}}{R_r} + p_{r1} - C_r \cdot \frac{dT_{r1}}{d_\tau} = 0 \tag{13}$$

$$\frac{T_{0}2 - T_{r}2}{R_{r}} + p_{r2} - C_{r} \cdot \frac{dT_{r}2}{d_{\tau}} = m_{r2} \cdot C_{sapph} \cdot \frac{dT_{r}2}{d_{\tau}} \tag{14}$$

The reference temperature $T_r$ is not measured directly. Substituting for $T_r$:

$$T_{r} = T_{s} - \Delta T \tag{15}$$

The heat balance equations become:

$$\frac{\Delta T_{0}1 + \Delta T_{1}}{R_{r}} + p_{r1} - C_{r} \cdot \left( \frac{dT_{s1}}{d_{\tau}} - \frac{d\Delta T_{1}}{d_{\tau}} \right) = 0 \tag{16}$$

$$\frac{\Delta T_{0}2 + \Delta T_{2}}{R_{r}} + p_{r2} - C_{r} \cdot \left( \frac{dT_{s2}}{d_{\tau}} - \frac{d\Delta T_{2}}{d_{\tau}} \right) = m_{r2} \cdot C_{sapph} \cdot \left( \frac{dT_{s2}}{d_{\tau}} - \frac{d\Delta T_{2}}{d_{\tau}} \right) \tag{17}$$

Simultaneous solution of these equations gives:

$$C_{r} = \frac{(\Delta T_{0}1 + \Delta T_{1}) \cdot \left[ m_{r2} \cdot C_{sapph} \cdot \left( \frac{dT_{s2}}{d_{\tau}} - \frac{d\Delta T_{2}}{d_{\tau}} \right) - p_{r2} \right] + (\Delta T_{0}2 + \Delta T_{2}) \cdot p_{r1}}{(\Delta T_{0}1 + \Delta T_{1}) \cdot \left( \frac{d\Delta T_{2}}{d_{\tau}} - \frac{dT_{s2}}{d_{\tau}} \right) + (\Delta T_{0}2 + \Delta T_{2}) \cdot \left( \frac{dT_{s1}}{d_{\tau}} - \frac{d\Delta T_{1}}{d_{\tau}} \right)} \tag{18}$$

$$R_{r} = \frac{(\Delta T_{0}1 + \Delta T_{1}) \cdot \left( \frac{d\Delta T_{2}}{d_{\tau}} - \frac{dT_{s2}}{d_{\tau}} \right) + (\Delta T_{0}2 + \Delta T_{2}) \cdot \left( \frac{dT_{s1}}{d_{\tau}} - \frac{d\Delta T_{1}}{d_{\tau}} \right)}{\left[ m_{r2} \cdot C_{sapph} \cdot \left( \frac{dT_{s1}}{d_{\tau}} - \frac{d\Delta T_{1}}{d_{\tau}} \right) - p_{r2} \right] \cdot \left( \frac{dT_{s1}}{d_{\tau}} - \frac{d\Delta T_{1}}{d_{\tau}} \right) - p_{r1} \cdot \left( \frac{d\Delta T_{2}}{d_{\tau}} - \frac{dT_{s2}}{d_{\tau}} \right)} \tag{19}$$

In an alternate embodiment, both calibration experiments may contain specimens. The specimens in the two calibration experiments must have substantially different masses. For example, the sample (reference) specimen masses are substantially different if the mass of the sample (reference) specimen for the first calibration experiment is twice the mass of the sample (reference) specimen for the second experiment, whereas a 5 % difference would not be substantial. In this embodiment, the heat balance equation for the first experiment on the sample side becomes:

$$\frac{\Delta T_{0}1}{R_{s}} + p_{s1} - C_{s} \cdot \frac{dT_{s1}}{d_{\tau}} = m_{s1} \cdot C_{sapph} \cdot \frac{dT_{s1}}{d_{\tau}} \tag{20}$$

and the heat balance equation for the first experiment on the reference side becomes:

$$\frac{\Delta T_{0}1 + \Delta T_{1}}{R_{r}} + p_{r1} - C_{r} \cdot \left( \frac{dT_{s1}}{d_{\tau}} - \frac{d\Delta T_{1}}{d_{\tau}} \right) = m_{r1} \cdot C_{sapph} \cdot \left( \frac{dT_{s1}}{d_{\tau}} - \frac{d\Delta T_{1}}{d_{\tau}} \right) \tag{21}$$

Solving simultaneously as before gives:

$$C_s = \frac{\Delta T_{01} \cdot \left( m_{s2} \cdot C_{sapph} \cdot \frac{dT_{s2}}{d_r} - p_{s2} \right) + \Delta T_{02} \cdot \left( p_{s1} - m_{s1} \cdot C_{sapph} \cdot \frac{dT_{s1}}{d_r} \right)}{\Delta T_{02} \cdot \frac{dT_{s1}}{d_r} - \Delta T_{01} \cdot \frac{dT_{s2}}{d_r}} \qquad (22)$$

$$R_s = \frac{\Delta T_{02} \cdot \frac{dT_{s1}}{d_r} - \Delta T_{01} \cdot \frac{dT_{s2}}{d_r}}{\frac{dT_{s1}}{d_r} \cdot \left( m_{s2} \cdot C_{sapph} \cdot \frac{dT_{s2}}{d_r} - p_{s2} \right) + \frac{dT_{s2}}{d_r} \cdot \left( p_{s1} - m_{s1} \cdot C_{sapph} \cdot \frac{dT_{s1}}{d_r} \right)} \qquad (23)$$

$$C_r = \frac{(\Delta T_{01} + \Delta T_1) \cdot \left[ m_{r2} \cdot C_{sapph} \cdot \left( \frac{dT_{s2}}{d_r} - \frac{d\Delta T_2}{d_r} \right) - p_{r2} \right] + (\Delta T_{02} + \Delta T_2) \cdot \left[ p_{r1} - m_{r1} \cdot C_{saph} \cdot \left( \frac{dT_{s1}}{d_r} - \frac{d\Delta T_1}{d_r} \right) \right]}{(\Delta T_{01} + \Delta T_1) \cdot \left( \frac{d\Delta T_2}{d_r} - \frac{dT_{s2}}{d_r} \right) + (\Delta T_{02} + \Delta T_2) \cdot \left( \frac{dT_{s1}}{d_r} - \frac{d\Delta T_1}{d_r} \right)} \qquad (24)$$

$$R_r = \frac{(\Delta T_{01} + \Delta T_1) \cdot \left( \frac{d\Delta T_2}{d_r} - \frac{dT_{s2}}{d_r} \right) + (\Delta T_{02} + \Delta T_2) \cdot \left( \frac{dT_{s1}}{d_r} - \frac{d\Delta T_1}{d_r} \right)}{\left( \frac{dT_{s1}}{d_r} - \frac{d\Delta T_1}{d_r} \right) \cdot \left[ m_{r2} \cdot C_{sapph} \cdot \left( \frac{dT_{s2}}{d_r} - \frac{d\Delta T_2}{d_r} \right) - p_{r2} \right] + \left( \frac{dT_{s2}}{d_r} + \frac{d\Delta T_2}{d_r} \right) \cdot \left[ p_{r1} - m_{r1} \cdot C_{sapph} \cdot \left( \frac{dT_{s1}}{d_r} - \frac{d\Delta T_1}{d_r} \right) \right]} \qquad (25)$$

The thermal capacitances and resistances are used to calculate sample heat flow during a DSC experiment. They may be used as tabular data with suitable interpolation for intermediate values, or they may be fitted by a mathematical expression, e.g., to a polynomial. In either case, the calculated capacitances and resistances must be applied as a function of temperature. Typically, the sapphire specimen masses range from 25 to 75 mg.

The power to the sample $p_s$ and the power to the reference $p_r$ are measured separately during the calibration step. The differential power is obtained by subtracting $p_r$ from $p_s$.

**Numerical Simulation**

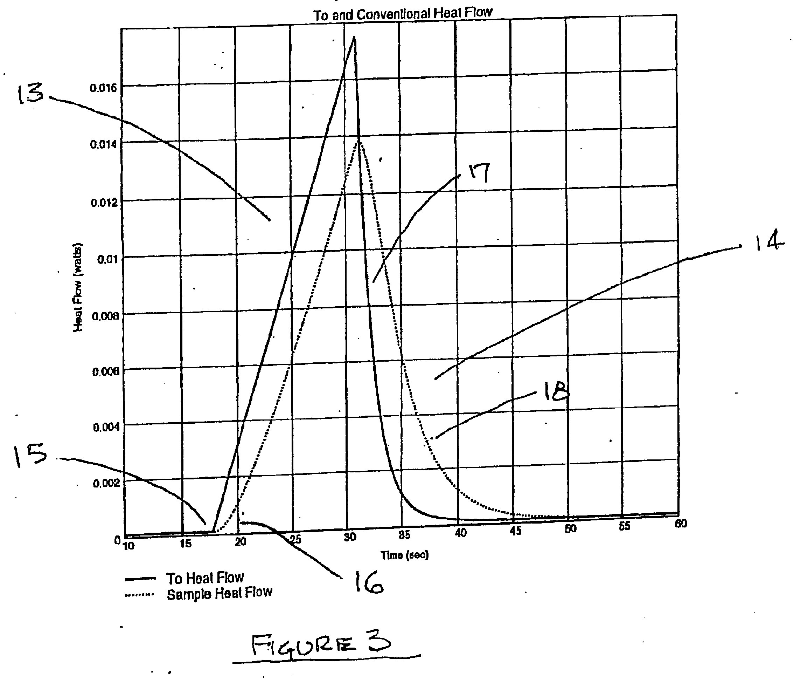

Figure 3 shows the result of a numerical simulation of a 5 mg indium sample heated at 10 °C/min through its melting point in a power compensation DSC. Heat flow is calculated using the five term equation (solid curve, trace 13) and using the conventional single term heat flow equation (dotted curve, trace 14). The melt onset is the point at which the indium sample begins to melt, at which temperature the heat flow to the sample increases abruptly. Ideally, the heat flow curve turns upward discontinuously when melting commences, but because of heat transfer effects within the sample, the sample pan, the detector and the interfaces between them, the heat flow curve is rounded off, or smeared. This smearing reduces the precision with which the temperature of the onset can be determined. The onset temperature is taken as the melting temperature of the sample, which is an important experimental result. Thus, sharper melt onset heat flow curves are preferred. Melt onset 15 of the five term heat flow curve is clearly much sharper than melt onset 16 of the single term heat flow equation. Notice also that the shape of the melt onset is distinctly different for the five term heat flow equation than for the single term equation.

During the melt, the heat flow continues to increase until the sample is entirely melted, at which point the heat flow to the sample decreases abruptly and the heat flow curve decays. If a second transition begins before the heat flow signal has decayed completely, the two transitions are difficult to separate (without introducing additional uncertainties) for purposes of determining the integrated peak areas of the two transitions, and the onset temperature of the second transition is more difficult to determine. Thus, the speed of the decay of the heat flow signal after the completion of the transition is important, with faster decay preferable because it improves the resolution of the calorimeter. The baseline return 17 of the five term heat flow signal is clearly much more rapid than baseline decay 18 of the single term heat flow signal, giving improved resolution. Because the heat flow signal is much greater during a melt, the calorimeter has greater sensitivity during the melt.

In an alternate embodiment, the present invention could be implemented using equation 4 instead of equation 6, by making individual measurements of sample and reference temperatures, and of the power supplied to the sample holder and reference holder, instead of by making differential measurements. The present invention could also be implemented by using a combination of differential and individual measurements.

## HEAT FLOW CALCULATION METHOD FOR DIFFERENTIAL SCANNING CALORIMETER

A further calculation that accounts for the heat flows associated with the sample and reference pans is described as a variant method.

Heat flow results from the method making use of a five term heat flow equation to account for sample and reference holder imbalances and differences in heating rate between the sample and reference holders show improved dynamic response and hence improved resolution along with improvements in the empty DSC cell heat flow. However, the heat flow signal obtained from the practice of the method still includes the effects of the sample pans.

## SUMMARY OF THE METHOD

A variant method for calculating sample heat flow in a differential scanning calorimeter, that accounts for differences in heating rate between the sample and reference (if a reference is used) is shown. It may be applied to heat flux or power compensation DSCs, which are able to measure the sample and the reference heat flows independently and which account for imbalances and differences in heating rate between the sample and reference sections of the heat flow measuring apparatus.

Differential scanning calorimeters employing this method furnish a sample heat flow signal that is an accurate representation of the sample heat flow during the entire DSC experiment, free of the smearing effects that are present in conventional DSC. DSCs using this method will have greatly improved resolution. Kinetic analysis requiring partial integration of peak areas can be practiced using this method whereas conventional DSC cannot be used, due to the distortions of the sample heat flow signal.

This is a method for calculating sample heat flow, including the heat flow effects of the sample pans using heat flow signals obtained as described. The result is a more accurate measurement of the sample heat flow during transitions when the heating rate of the sample differs from that of the reference. Resolution is improved because the return to baseline of the heat flow signal at the completion of a transformation is much more rapid.

## POWER COMPENSATION DSCs

A power compensation DSC according to the invention comprises independent sample and reference holders that may be modeled using a thermal resistance and a thermal capacitance for each of the sample and reference holders as shown in Figure 1. Thermal resistance and capacitance elements are idealizations of the sample and reference holders, which allow mathematical expressions describing the thermal behavior of the DSC to be written. $R_s$ and $R_r$ are thermal resistances, $C_s$ and $C_r$ are thermal capacitances representing the sample and reference holders. To, $T_s$ and $T_r$ are the temperatures of the isothermal enclosure, sample holder and reference holder. Heating power supplied to the sample holder is $p_s$, comprising the average heating power plus the differential power. Heating power supplied to the reference holder is $p_r$, comprising the average heating power minus the differential power. The heat flow to the sample and its pan and to the reference and its pan are $q_s$ and $q_r$.

Performing a heat balance on the sample and reference gives the heat flow differential equations,

$$q_s = \frac{T_0 - T_s}{R_s} + p_s - C_s \cdot \frac{dT_s}{d\tau} \qquad q_r = \frac{T_0 - T_r}{R_r} + p_r - C_r \cdot \frac{dT_r}{d\tau}$$

In the preferred embodiment of the invention, temperature To, the difference between the isothermal enclosure and sample holder temperatures and the difference between the sample and reference holder temperatures are measured. The differential temperatures are defined by:

$$\Delta T = T_s - T_r \qquad \Delta T_0 = T_0 - T_r$$

Substituting into the heat balance equations gives,

$$q_s = \frac{\Delta T_0}{R_s} + p_s - C_s \cdot \frac{dT_s}{d\tau} \quad \text{and} \quad q_r = \frac{\Delta T_0 + \Delta T}{R_r} + p_r - C_r \cdot \left( \frac{dT_s}{d\tau} - \frac{d\Delta T}{d\tau} \right)$$

Sample temperature is obtained from the definition of $\Delta T_0$,

$$T_s = T_0 - \Delta T_0$$

Thermal resistances and capacitances of the sample and reference holders as a function of temperature are obtained using the calibration method disclosed in the invention. Using thermal resistances and capacitances from calibration with the sample and reference holder power, temperatures and differential temperatures measured during a DSC experiment allows the sample and reference beat flow, $q_s$ and $q_r$ to be found. As used in the invention and in conventional DSC, the difference between sample and reference heat flows is the desired result.

$$q = q_s - q_r$$

As noted above, the sample and reference heat flows include the heat flow to the sample and reference and to their pans.

$$q_s = q_{ss} + q_{ps} \qquad q_r = q_{rs} + q_{pr}$$

Where $q_{rs}$ is the sample heat flow, $q_{ps}$ is the sample pan heat flow, $q_{rs}$ is the reference heat flow and $q_{rp}$ is the reference pan heat flow. The pans and the reference do not have transitions so that their heat flows are just the sensible heat associated with their specific heats:

$$q_{ps} = m_{ps} \cdot c_p \cdot \frac{dT_{ps}}{d\tau} \qquad q_r = m_{pr} \cdot c_p \cdot \frac{dT_{pr}}{d\tau} + m_{rs} \cdot c_{rs} \cdot \frac{dT_{pr}}{d\tau}$$

Where $m_{ps}$ and $m_{pr}$ are the masses of the sample and reference pans, $c_p$ is the specific heat of the pan material, $m_{rs}$ is the mass of the reference material, $c_{rs}$ is the specific heat of the reference material. The sample pan temperature is $T_{ps}$ and the reference pan temperature is $T_{pr}$. It is assumed that because the reference material has no transitions it heats at the same rate as the reference pan.
Substituting for the sample pan heat flow and solving for the sample heat flow:

$$q_{ss} = q_s - m_{ps} \cdot c_p \cdot \frac{dT_{ps}}{d\tau}$$

Solving the reference heat flow equation for the pan specific heat and substituting it into the sample heat flow equation:

$$q_{ss} = q_s - q_r \cdot \frac{m_{ps}}{m_{pr}} \cdot \frac{\dfrac{dT_{ps}}{d\tau}}{\dfrac{dT_{pr}}{d\tau}} + \frac{m_{ps}}{m_{pr}} \cdot m_{rs} \cdot c_{rs} \cdot \frac{dT_{ps}}{d\tau}$$

This equation gives the actual sample heat flow, accounting for the sample and reference pan heat flows and the heat flow to the reference. The second term on the right hand side is seen to be the reference heat flow multiplied by the ratio of the sample and reference pan masses and by the ratio of the sample and reference pan heating rates. It accounts for the fact that during a transition, the sample pan heats at a different rate than the reference pan because of the transition heat flow. The third term accounts for the heat flow to the reference material. In most cases, the reference pan is empty and the sample heat flow equation becomes.

$$q_{ss} = q_s - q_r \cdot \frac{m_{ps} \cdot \frac{dT_{ps}}{d\tau}}{m_{pr} \cdot \frac{dT_{pr}}{d\tau}}$$

When the sample heating rate is different from the reference heating rate, the fraction of reference heat flow subtracted from the sample heat flow is greater or less, depending upon whether the sample pan heating rate is greater or less than that of the reference pan. Because the reference heat flow is just the reference pan heat flow, this equation accounts for differences between sample and reference pan heating rates. For example, during a melt in DSC, the sample pan heating rate falls below the programmed rate, while the reference pan continues to heat at the programmed rate. In a conventional DSC the reference heat flow being subtracted from the sample heat flow is for a pan heating at the programmed rate thus, during the melt too much heat is being subtracted from the sample heat flow and the heat flow signal is too small. During the baseline return, the sample pan is heating faster than the reference pan and insufficient heat flow is subtracted from the sample heat flow, consequently the heat flow signal is too large.

To use the true sample heat flow equation requires that the sample and reference pan temperatures be known so that their derivatives may be taken. Unfortunately there is no way to measure the pan temperatures directly. The pan temperatures can be calculated using the temperature and heat flow signals.

The equations for heat flow from the sample and reference holders to the sample and reference pans are:

$$q_s = \frac{T_s - T_{ps}}{R_{ps}} \qquad q_r = \frac{T_r - T_{pr}}{R_{pr}}$$

Solving for the pan temperatures:

$$T_{ps} = T_s - q_s \cdot R_{ps} \qquad T_{pr} = T_r - q_r \cdot R_{pr}$$

Using these equations, the pan temperatures and sample heat flows are obtained from measurements. A predetermined function is used for the pan thermal resistances. Pan thermal resistance depends on the pan configuration, purge gas used in the DSC and the temperature of the DSC.

It must be noted that the present method cannot be applied to power compensation DSCs generally. The sample and the reference heat flows must be measured separately. The invention allows the sample and reference heat flows to be measured separately and is required to practice the present method.

**EXPERIMENTAL RESULTS**

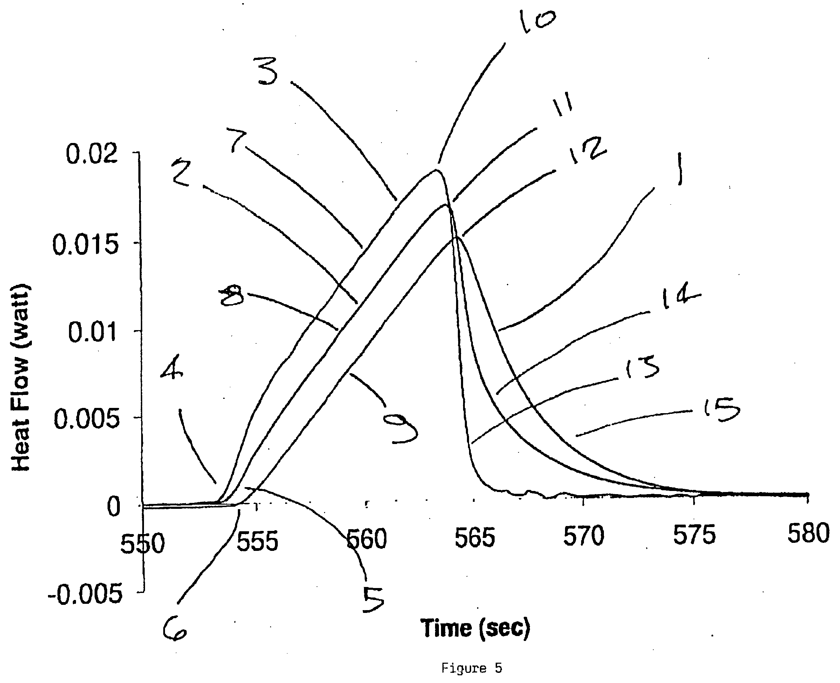

Figure 5 shows the application of the variant method, to the calculation of DSC heat flows in a heat flux DSC, for a 4.92 mg indium melt at 10 °C/min plotted versus time. The conventional DSC result in the curve labeled 1, the result using the invention without the present method is labeled 2 and the result using the variant method, is labeled 3. Beginning at the left side of the plot, the onset of the indium melt for the current method 4 occurs earlier and is steeper than the onset of indium that occurs using the invention without the present method application 5, or using a conventional DSC 6. During the melt, the heat flow signal of the present method 7 is much larger than that obtained using the invention without the present method 8, which in turn is substantially larger than the signal obtained using conventional DSC 9. The melt is completed at the heat flow signal peak when the latent heat of fusion has been absorbed by the sample.

Also, the heat flow peak of the present method 10 is higher and occurs slightly earlier compared to the peak of the invention 11 without the present method, and much higher and earlier still than the peak obtained using a conventional DSC 12. Immediately following the peak, the sample heat flow decreases rapidly as the flow of heat to the sample following the melt returns to the value just before the transition which, corresponds to the specific heat of the sample. The post melt decay of the heat flow signal 13 of the present method is extremely rapid, while the post melt heat flow decay 14 of the invention without the present method is much slower and the post melt decay 15 of conventional DSC is slower still. The complete indium melt heat flow signal 3 of the current method comprising the onset 4, melt 7, peak heat flow 10 and post melt decay 13 is a much more accurate measurement than that of the invention without the present method or of a conventional DSC.

The foregoing disclosure of embodiments of the present invention has been presented for purposes of illustration and description. The invention is to be defined only by the claims appended hereto.

**Claims**

1. A power compensation differential scanning calorimeter comprising:

    a) an isothermal enclosure (203) having a sample holder assembly (201 s) and a reference holder assembly (201 r) installed in the isothermal enclosure (203);
    b) the sample holder (201 s) supported by a sample thermal resistor (208s) having a small cross-sectional area in the direction normal to the heat flow to the sample holder (201 s), wherein the sample holder (201 s) has a sample temperature detector (202s) and a sample heating element, and is adapted to receive a sample, wherein the sample thermal resistor (208s) is the principal path for heat exchange between the sample holder (201s) and the isothermal enclosure (203);
    c) the reference holder (201 r) supported by a reference thermal resistor (209r) having a small cross-sectional area in the direction normal to the heat flow to the reference holder(201r), wherein the reference holder has a reference temperature detector (202r) and a reference heating element, and is adapted to receive a reference wherein the reference thermal resistor (209r) is the principal path for heat exchange between the reference holder (201 r) and the isothermal enclosure (203); and
    d) an isothermal enclosure temperature detector (210) installed into the body of the isothermal enclosure for measuring the isothermal temperature of said isothermal enclosure (203).

2. A power compensation differential scanning calorimeter according to claim 1, **characterized in that**:

    a) one of the sample temperature detector (202s), reference temperature detector (202r) and isothermal enclosure temperature detector (210) is used as an absolute temperature detector;
    b) the difference $(T_o-T_s)$ between the sample temperature and the isothermal enclosure temperature; the difference $(T_o - T_r)$ between the reference temperature and the isothermal enclosure temperature; or the difference $(T_s - T_r)$ between the sample temperature and the reference temperature is used as a first differential temperature measurement
    c) another one of the difference $(T_s - T_r)$ between the sample temperature and the reference temperature; the difference $(T_o - T_s)$ between the sample temperature and the isothermal enclosure temperature;, or the difference $(T_o - T_r)$ between the reference temperature and the isothermal enclosure temperature is used as a second differential temperature measurement; and further comprising
    d) meters for measuring a differential power to the sample with respect to the reference, wherein the power compensation calorimeter is calibrated by running a first experiment with an empty cell according to a pre-selected temperature program, and running a second experiment, with a sample sapphire specimen in a sample holder and a reference sapphire specimen in a reference holder, according to the same pre-selected temperature program.

3. The power compensation differential scanning calorimeter of claim 2, wherein the sample thermal capacitance $(C_s)$ is calculated according to:

$$C_s = \frac{\Delta T_{o1} \cdot \left( m_{s2} \cdot C_{sapph} \cdot \dfrac{dT_{s2}}{d\tau} - p_{s2} \right) + \Delta T_{o2} \cdot p_{s1}}{\Delta T_{o2} \cdot \dfrac{dT_{s1}}{d\tau} - \Delta T_{o1} \cdot \dfrac{dT_{s2}}{d\tau}}$$

wherein

$\Delta T_0$ is the temperature difference between the temperature of the isothermal enclosure $T_0$ and the temperature of the sample holder $T_s$; $m_s$ is the mass of the sapphire sample;

$C_{sapph}$ is the known heat capacity of the sapphire sample;

$T_s$, $T_r$, are the sample and reference temperatures; $p_s$, $p_r$, is the power supplied to the sample and reference holders;

$\Delta T$ is the temperature difference between the sample and reference holder temperatures;

The numerical subscripts 1 and 2 indicate the first and second calibration experiments.

4. The power compensation differential scanning calorimeter of claim 2, wherein the sample thermal resistance ($R_s$) is calculated according to:

$$R_s = \frac{\Delta T_{o2} \cdot \dfrac{dT_{s1}}{d\tau} - \Delta T_{o1} \cdot \dfrac{dT_{s2}}{d\tau}}{\dfrac{dT_{s1}}{d\tau} \cdot \left( m_{s2} \cdot C_{sapph} \cdot \dfrac{dT_{s2}}{d\tau} - p_{s2} \right) + \dfrac{dT_{s2}}{d\tau} \cdot p_{s1}}$$

wherein

$\Delta T_0$ is the temperature difference between the temperature of the isothermal enclosure $T_0$ and the temperature of the sample holder $T_s$; $m_s$ is the mass of the sapphire sample;

$C_{sapph}$ is the known heat capacity of the sapphire sample;

$T_s$, $T_r$, are the sample and reference temperatures; $p_s$, $p_r$, is the power supplied to the sample and reference holders;

$\Delta T$ is the temperature difference between the sample and reference holder temperatures;

The numerical subscripts 1 and 2 indicate the first and second calibration experiments.

5. The power compensation differential scanning calorimeter of claim 2, wherein the reference thermal capacitance ($C_r$) is calculated according to:

$$C_r = \frac{(\Delta T_{o1} + \Delta T_1) \cdot \left[ m_{r2} \cdot C_{sapph} \cdot \left( \dfrac{dT_{s2}}{d\tau} - \dfrac{d\Delta T_2}{d\tau} \right) - p_{r2} \right] + (\Delta T_{o2} + \Delta T_2) \cdot p_{r1}}{(\Delta T_{o1} + \Delta T_1) \cdot \left( \dfrac{d\Delta T_2}{d\tau} - \dfrac{dT_{s2}}{d\tau} \right) + (\Delta T_{o2} + \Delta T_2) \cdot \left( \dfrac{dT_{s1}}{d\tau} - \dfrac{d\Delta T_1}{d\tau} \right)}$$

wherein

$\Delta T_0$ is the temperature difference between the temperature of the isothermal enclosure $T_0$ and the temperature of the sample holder $T_s$;

$m_s$ is the mass of the sapphire sample;

$C_{sapph}$ is the known heat capacity of the sapphire sample;

$T_s$, $T_r$, are the sample and reference temperatures;

$p_s$, $p_r$, is the power supplied to the sample and reference holders;

$\Delta T$ is the temperature difference between the sample and reference holder temperatures;

The numerical subscripts 1 and 2 indicate the first and second calibration experiments.

6. The power compensation differential scanning calorimeter of claim 2, wherein the reference thermal resistance ($R_r$) is calculated according to:

$$R_r = \cfrac{\left(\Delta T_{o1} + \Delta T_1\right) \cdot \left(\cfrac{d\Delta T_2}{d\tau} - \cfrac{dT_{s2}}{d\tau}\right) + \left(\Delta T_{o2} + \Delta T_2\right) \cdot \left(\cfrac{dT_{s1}}{d\tau} - \cfrac{d\Delta T_1}{d\tau}\right)}{\left[m_{r2} \cdot C_{sapph} \cdot \left(\cfrac{dT_{s1}}{d\tau} - \cfrac{d\Delta T_1}{d\tau}\right) - p_{r2}\right] \cdot \left(\cfrac{dT_{s1}}{d\tau} - \cfrac{d\Delta T_1}{d\tau}\right) - p_{r1} \cdot \left(\cfrac{d\Delta T_2}{d\tau} - \cfrac{dT_{s2}}{d\tau}\right)}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

The numerical subscripts 1 and 2 indicate the first and second calibration experiments.

7.  The power compensation differential scanning calorimeter of claim 2, wherein the absolute temperature detector measures the sample temperature ($T_s$), the first differential temperature detector measures the difference ($\Delta T_o = T_o - T_s$) between the sample temperature and the isothermal enclosure temperature, and the second differential temperature detector measures the difference ($\Delta T = T_s - T_r$) between the sample temperature and the reference temperature, and
wherein the differential heat flow to the sample is calculated according to:

$$q = \Delta p + \Delta T_o \cdot \left(\frac{R_r - R_s}{R_r \cdot R_s}\right) - \frac{\Delta T}{R_r} + \left(C_r - C_s\right) \cdot \frac{dT_s}{d\tau} - C_r \cdot \frac{d\Delta T}{d\tau}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

$\Delta p = p_s - p_r$; $R_s$, $R_r$ are the thermal resistances of the sample and reference portions; $C_r$, $C_s$ are the thermal capacitances.

8.  A power compensation differential scanning calorimeter according to claim 1 **characterized in that**:

a) one of the sample temperature detector (202s), reference temperature detector (202r) and isothermal enclosure temperature detector (202t) is used as an absolute temperature detector;
b) the difference ($T_o - T_s$) between the sample temperature and the isothermal enclosure temperature; the difference ($T_o - T_r$) between the reference temperature and the isothermal enclosure temperature; or the difference ($T_s - T_r$) between the sample temperature and the reference temperature is used as a first differential temperature measurement;
c) another one of the difference ($T_s - T_r$) between the sample temperature and the reference temperature; the difference ($T_o - T_r$) between the sample temperature and the isothermal enclosure temperature; or the difference ($T_o - T_r$) between the reference temperature and the isothermal enclosure temperature is used as a second differential temperature measurement; and further comprising
d) meters for measuring a differential power ($\Delta P$) to the sample with respect to the reference,
wherein the power compensation calorimeter is calibrated by running a first experiment with a first sample sapphire specimen in a sample holder and a first reference sapphire specimen in a reference holder according to a pre-selected temperature program, and running a second experiment, with a second sample sapphire specimen in the sample holder and a second reference sapphire specimen in the reference holder, according to the same pre-selected temperature program, wherein the first sample sapphire specimen has a mass that is substantially different from the mass of the second sample sapphire specimen.

9. The power compensation differential scanning calorimeter of claim 8, wherein sample thermal capacitance ($C_s$) is calculated according to:

$$C_s = \frac{\Delta T_{o1} \cdot \left( m_{s2} \cdot C_{sapph} \cdot \frac{dT_{s2}}{d_\tau} - p_{s2} \right) + \Delta T_{o2} \cdot \left( p_{s1} - m_{s1} \cdot C_{sapph} \cdot \frac{dT_{s1}}{d_\tau} \right)}{\Delta T_{o2} \cdot \frac{dT_{s1}}{d_\tau} - \Delta T_{o1} \cdot \frac{dT_{s2}}{d_\tau}}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

The numerical subscripts 1 and 2 indicate the first and second calibration experiments.

10. The power compensation differential scanning calorimeter of claim 8, wherein sample thermal resistance ($R_s$) is calculated according to:

$$R_s = \frac{\Delta T_{o2} \cdot \frac{dT_{s1}}{d_\tau} - \Delta T_{o1} \cdot \frac{dT_{s2}}{d_\tau}}{\frac{dT_{s1}}{d_\tau} \cdot \left( m_{s2} \cdot C_{sapph} \cdot \frac{dT_{s2}}{d_\tau} - p_{s2} \right) + \frac{dT_{s2}}{d_\tau} \cdot \left( p_{s1} - m_{s1} \cdot C_{sapph} \cdot \frac{dT_{s1}}{d_\tau} \right)}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

The numerical subscripts 1 and 2 indicate the first and second calibration experiments.

11. The power compensation differential scanning calorimeter of claim 8, wherein reference thermal capacitance ($C_r$) is calculated according to:

$$C_r = \frac{(\Delta T_{o1} + \Delta T_1) \cdot \left[ m_{r2} \cdot C_{sapph} \cdot \left( \frac{dT_{s2}}{d_\tau} - \frac{d\Delta T_2}{d_\tau} \right) - p_{r2} \right] + (\Delta T_{o2} + \Delta T_2) \cdot \left[ p_{r1} - m_{r1} \cdot C_{saph} \cdot \left( \frac{dT_{s1}}{d_\tau} - \frac{d\Delta T_1}{d_\tau} \right) \right]}{(\Delta T_{o1} + \Delta T_1) \cdot \left( \frac{d\Delta T_2}{d_\tau} - \frac{dT_{s2}}{d_\tau} \right) + (\Delta T_{o2} + \Delta T_2) \cdot \left( \frac{dT_{s1}}{d_\tau} - \frac{d\Delta T_1}{d_\tau} \right)}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

The numerical subscripts 1 and 2 indicate the first and second calibration experiments.

**12.** The power compensation differential scanning calorimeter of claim 8, wherein reference thermal resistance ($R_r$) is calculated according to:

$$R_r = \frac{(\Delta T_{o1} + \Delta T_1) \cdot \left( \frac{d\Delta T_2}{d_r} - \frac{dT_{s2}}{d_r} \right) + (\Delta T_{o2} + \Delta T_2) \cdot \left( \frac{dT_{s1}}{d_r} - \frac{d\Delta T_1}{d_r} \right)}{\left( \frac{dT_{s1}}{d_r} - \frac{d\Delta T_1}{d_r} \right) \cdot \left[ m_{r2} \cdot C_{sapph} \cdot \left( \frac{dT_{s2}}{d_r} - \frac{d\Delta T_2}{d_r} \right) - p_{r2} \right] + \left( \frac{dT_{s2}}{d_r} - \frac{d\Delta T_2}{d_r} \right) \cdot \left[ p_{r1} - m_{r1} \cdot C_{sapph} \cdot \left( \frac{dT_{s1}}{d_r} - \frac{d\Delta T_1}{d_r} \right) \right]}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

The numerical subscripts 1 and 2 indicate the first and second calibration experiments.

**13.** The power compensation differential scanning calorimeter of claim 8,
wherein the absolute temperature detector measures the sample temperature $T_s$ the first differential temperature detector measures the difference between the sample temperature and the isothermal enclosure temperature $T_0$, and the second differential temperature detector measures the difference between the sample temperature $T_s$ and the reference temperature $T_r$, and
wherein the differential heat flow to the sample is calculated according to:

$$q = \Delta p + \Delta T_o \cdot \left( \frac{R_r - R_s}{R_r \cdot R_s} \right) - \frac{\Delta T}{R_r} + (C_r - C_s) \cdot \frac{dT_s}{d_r} - C_r \cdot \frac{d\Delta T}{d_r}$$

wherein

$\Delta T_0$ is the temperature difference between the temperature of the isothermal enclosure $T_0$ and the temperature of the sample holder $T_s$; $m_s$ is the mass of the sapphire sample;
$C_{sapph}$ is the known heat capacity of the sapphire sample;
$T_s$, $T_r$, are the sample and reference temperatures; $p_s$, $p_r$, is the power supplied to the sample and reference holders;
$\Delta T$ is the temperature difference between the sample and reference holder temperatures;

$\Delta_p = p_s - p_r$; $R_s$, $R_r$ is the thermal resistance of the sample reference; $C_s$, $C_r$ are the thermal capacitances of the sample reference.

**14.** The power compensation differential scanning calorimeter of claim 1, wherein the sample temperature detector measures absolute temperature.

**15.** The power compensation differential scanning calorimeter of claim 1, wherein the power compensation differential scanning calorimeter measures a first differential temperature between the sample holder and the reference holder, a second differential temperature between the sample holder and the isothermal enclosure, and a differential power between the sample and the reference.

**16.** The power compensation differential scanning calorimeter of claim 15, wherein the differential power between the sample and the reference is measured by separately measuring power to the sample holder and power to the reference holder, and calculating a difference between the power to the sample holder and the power to the reference holder.

**17.** The power compensation differential scanning calorimeter of claim 16, wherein the power to the sample holder and the power to the reference holder are measured by instrumentation that measures voltages and currents to the sample heating element and the reference heating element.

**18.** The power compensation differential scanning calorimeter of claim 1, wherein the isothermal enclosure is cooled and is constructed of a high conductivity material.

**19.** The power compensation differential scanning calorimeter of claim 1, wherein the sample holder contains a sample pan for receiving the sample, and wherein the sample holder has a lid for enclosing the sample inside the sample holder.

**20.** The power compensation differential scanning calorimeter of claim 1, wherein the reference holder contains a reference pan for receiving the reference, and wherein the reference holder has a lid for enclosing the reference inside the reference holder.

**21.** The power compensation differential scanning calorimeter of claim 1, wherein the differential heat flow to the sample with respect to the reference is calculated using a five-term heat flow equation.

**Patentansprüche**

**1.** Differentialabtastkalorimeter mit Leistungskompensation, umfassend:

a) ein isothermisches Behältnis (203) aufweisend eine Probenhalteranordnung (201s) und eine Referenzhalteranordnung (201 r), die in dem isothermischen Behältnis (203) installiert sind;
b) den Probenhalter (201s), der von einem Probenthermowiderstand (208s) aufweisend eine kleine Querschnittsfläche in der Richtung normal zum Wärmestrom zum Probenhalter (201s) getragen wird, worin der Probenhalter (201s) einen Probentemperaturdetektor (202s) und ein Probenheizelement aufweist und ausgelegt ist, um eine Probe aufzunehmen, worin der Probenthermowiderstand (208s) der Hauptweg für den Wärmeaustausch zwischen dem Probenhalter (201s) und dem isothermischen Behältnis (203) ist;
c) den Referenzhalter (201 r), der von einem Referenzthermowiderstand (209r) aufweisend eine kleine Querschnittsfläche in der Richtung normal zum Wärmestrom zum Referenzhalter (201 r) getragen wird, worin der Referenzhalter einen Referenztemperaturdetektor (202r) und ein Referenzheizelement aufweist und ausgelegt ist, um eine Referenz aufzunehmen, worin der Referenzthermowiderstand (209r) der Hauptweg für den Wärmeaustausch zwischen dem Referenzhalter (201 r) und dem isothermischen Behältnis (203) ist; und
d) einen Temperaturdetektor (210) für das isothermische Behältnis, installiert im Körper des isothermischen Behältnisses zum Messen der isothermischen Temperatur von besagtem isothermischem Behältnis (203).

**2.** Differentialabtastkalorimeter mit Leistungskompensation nach Anspruch 1, **dadurch gekennzeichnet, dass**:

a) einer des Probentemperaturdetektors (202s), Referenztemperaturdetektors (202r) und Temperaturdetektors (210) für das isothermische Behältnis als Absoluttemperaturdetektor verwendet wird;
b) die Differenz $(T_0 - T_s)$ zwischen der Probentemperatur und der Temperatur des isothermischen Behältnisses; die Differenz $(T_0 - T_r)$ zwischen der Referenztemperatur und der Temperatur des isothermischen Behältnisses; oder die Differenz $(T_s - T_r)$ zwischen der Probentemperatur und der Referenztemperatur als erste Differentialtemperaturmessung verwendet wird
c) eine andere der Differenz $(T_s - T_r)$ zwischen der Probentemperatur und der Referenztemperatur; der Differenz $(T_0 - T_s)$ zwischen der Probentemperatur und der Temperatur des isothermischen Behältnisses; oder der Dif-

ferenz ($T_s$ - $T_r$) zwischen der Referenztemperatur und der Temperatur des isothermischen Behältnisses als zweite Differentialtemperaturmessung verwendet wird; und ferner umfassend

d) Messgeräte zum Messen einer Differentialleistung zur Probe mit Bezug auf die Referenz, worin das Kalorimeter mit Leistungskompensation durch Ausführen eines ersten Experiments mit einer leeren Zelle gemäß einem vorgewählten Temperaturprogramm und Ausführen eines zweiten Experiments mit einem Probensaphirmuster in einem Probenhalter und einem Referenzsaphirmuster in einem Referenzhalter gemäß demselben vorgewählten Temperaturprogramm kalibriert wird.

3. Differentialabtastkalorimeter mit Leistungskompensation nach Anspruch 2, worin die Probenthermokapazität ($C_s$) gemäß Folgendem berechnet wird:

$$C_s = \frac{\Delta T_{o1} \cdot \left( m_{s2} \cdot C_{sapph} \cdot \frac{dT_{s2}}{d\tau} - p_{s2} \right) + \Delta T_{o2} \cdot p_{s1}}{\Delta T_{o2} \cdot \frac{dT_{s1}}{d\tau} - \Delta T_{o1} \cdot \frac{dT_{s2}}{d\tau}}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
Die Tiefzahlen 1 und 2 geben die ersten und zweiten Kalibrierexperimente an.

4. Differentialabtastkalorimeter mit Leistungskompensation nach Anspruch 2, worin der Probenthermowiderstand ($R_s$) gemäß Folgendem berechnet wird:

$$R_s = \frac{\Delta T_{o2} \cdot \frac{dT_{s1}}{d\tau} - \Delta T_{o1} \cdot \frac{dT_{s2}}{d\tau}}{\frac{dT_{s1}}{d\tau} \cdot \left( m_{s2} \cdot C_{sapph} \cdot \frac{dT_{s2}}{d\tau} - p_{s2} \right) + \frac{dT_{s2}}{d\tau} \cdot p_{s1}}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
Die Tiefzahlen 1 und 2 geben die ersten und zweiten Kalibrierexperimente an.

5. Differentialabtastkalorimeter mit Leistungskompensation nach Anspruch 2, worin die Referenzthermokapazität ($C_r$) gemäß Folgendem berechnet wird:

$$C_r = \frac{(\Delta T_{o1} + \Delta T_1) \cdot \left[ m_{r2} \cdot C_{sapph} \cdot \left( \dfrac{dT_{s2}}{d_t} - \dfrac{d\Delta T_2}{d_t} \right) - p_{r2} \right] + (\Delta T_{o2} + \Delta T_2) \cdot p_{r1}}{(\Delta T_{o1} + \Delta T_1) \cdot \left( \dfrac{d\Delta T_2}{d_t} - \dfrac{dT_{s2}}{d_t} \right) + (\Delta T_{o2} + \Delta T_2) \cdot \left( \dfrac{dT_{s1}}{d_t} - \dfrac{d\Delta T_1}{d_t} \right)}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
Die Tiefzahlen 1 und 2 geben die ersten und zweiten Kalibrierexperimente an.

**6.** Differentialabtastkalorimeter mit Leistungskompensation nach Anspruch 2, worin der Referenzthermowiderstand ($R_r$) gemäß Folgendem berechnet wird:

$$R_r = \frac{(\Delta T_{o1} + \Delta T_1) \cdot \left( \dfrac{d\Delta T_2}{d_t} - \dfrac{dT_{s2}}{d_t} \right) + (\Delta T_{o2} + \Delta T_2) \cdot \left( \dfrac{dT_{s1}}{d_t} - \dfrac{d\Delta T_1}{d_t} \right)}{\left[ m_{r2} \cdot C_{sapph} \cdot \left( \dfrac{dT_{s1}}{d_t} - \dfrac{d\Delta T_1}{d_t} \right) - p_{r2} \right] \cdot \left( \dfrac{dT_{s1}}{d_t} - \dfrac{d\Delta T_1}{d_t} \right) - p_{r1} \cdot \left( \dfrac{d\Delta T_2}{d_t} - \dfrac{dT_{s2}}{d_t} \right)}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
Die Tiefzahlen 1 und 2 geben die ersten und zweiten Kalibrierexperimente an.

**7.** Differentialabtastkalorimeter mit Leistungskompensation nach Anspruch 2, worin der Absoluttemperaturdetektor die Probentemperatur ($T_s$) misst, der erste Differentialtemperaturdetektor die Differenz ($\Delta T_0 = T_0 - T_s$) zwischen der Probentemperatur und der Temperatur des isothermischen Behältnisses misst und der zweite Differentialtemperaturdetektor die Differenz ($\Delta T = T_s - T_r$) zwischen der Probentemperatur und der Referenztemperatur misst, und worin der Differentialwärmestrom zur Probe gemäß Folgendem berechnet wird:

$$q = \Delta p + \Delta T_0 \cdot \left( \frac{R_r - R_s}{R_r \cdot R_s} \right) - \frac{\Delta T}{R_r} + (C_r - C_s) \cdot \frac{dT_s}{d_t} - C_r \cdot \frac{d\Delta T}{d_t}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;

$C_{sapph}$ ist die bekannte Wärmekapazität der Saphirprobe;

$T_s$, $T_r$ sind die Proben- und Referenztemperaturen;

$p_s$, $p_r$ ist die den Proben- und Referenzhaltern zugeführte Leistung;

$\Delta T$ ist die Temperaturdifferenz zwischen den Proben- und Referenzhaltertemperaturen;

$\Delta p = P_s - P_r$; $R_s$, $R_r$ sind die Thermowiderstände der Proben- und Referenzabschnitte; $C_r$, $C_s$ sind die thermischen Kapazitäten.

**8.** Differentialabtastkalorimeter mit Leistungskompensation nach Anspruch 1, **dadurch gekennzeichnet, dass**:

a) einer des Probentemperaturdetektors (202s), Referenztemperaturdetektors (202r) und Temperaturdetektors (202t) für das isothermische Behältnis als Absoluttemperaturdetektor verwendet wird;

b) die Differenz $(T_o - T_s)$ zwischen der Probentemperatur und der Temperatur des isothermischen Behältnisses; die Differenz $(T_o - T_r)$ zwischen der Referenztemperatur und der Temperatur des isothermischen Behältnisses; oder die Differenz $(T_s - T_r)$ zwischen der Probentemperatur und der Referenztemperatur als erste Differentialtemperaturmessung verwendet wird;

c) eine andere der Differenz $(T_s - T_r)$ zwischen der Probentemperatur und der Referenztemperatur; der Differenz $(T_o - T_r)$ zwischen der Probentemperatur und der Temperatur des isothermischen Behältnisses; oder der Differenz $(T_0 - T_r)$ zwischen der Referenztemperatur und der Temperatur des isothermischen Behältnisses als zweite Differentialtemperaturmessung verwendet wird; und ferner umfassend

d) Messgeräte zum Messen einer Differentialleistung $\Delta P$ zur Probe mit Bezug auf die Referenz, worin das Kalorimeter mit Leistungskompensation durch Ausführen eines ersten Experiments mit einem ersten Probensaphirmuster in einem Probenhalter und einem ersten Referenzsaphirmuster in einem Referenzhalter gemäß einem vorgewählten Temperaturprogramm und Ausführen eines zweiten Experiments mit einem zweiten Probensaphirmuster in dem Probenhalter und einem zweiten Referenzsaphirmuster in dem Referenzhalter gemäß demselben vorgewählten Temperaturprogramm kalibriert wird, worin das erste Probensaphirmuster eine Masse aufweist, die sich von der Masse des zweiten Probensaphirmusters wesentlich unterscheidet.

**9.** Differentialabtastkalorimeter mit Leistungskompensation nach Anspruch 8, worin die Probenthermokapazität ($C_s$) gemäß Folgendem berechnet wird:

$$C_s = \frac{\Delta T_{o1} \cdot \left( m_{s2} \cdot C_{sapph} \cdot \frac{dT_{s2}}{d\tau} - p_{s2} \right) + \Delta T_{o2} \cdot \left( p_{s1} - m_{s1} \cdot C_{sapph} \cdot \frac{dT_{s1}}{d\tau} \right)}{\Delta T_{o2} \cdot \frac{dT_{s1}}{d\tau} - \Delta T_{o1} \cdot \frac{dT_{s2}}{d\tau}}$$

wobei gilt

$\Delta T_0$ ist die Temperaturdifferenz zwischen der Temperatur des isothermischen Behältnisses $T_0$ und der Temperatur des Probenhalters $T_s$;

$m_s$ ist die Masse der Saphirprobe;

$C_{sapph}$ ist die bekannte Wärmekapazität der Saphirprobe;

$T_s$, $T_r$ sind die Proben- und Referenztemperaturen;

$p_s$, $p_r$ ist die den Proben- und Referenzhaltern zugeführte Leistung;

$\Delta T$ ist die Temperaturdifferenz zwischen den Proben- und Referenzhaltertemperaturen;

Die Tiefzahlen 1 und 2 geben die ersten und zweiten Kalibrierexperimente an.

**10.** Differentialabtastkalorimeter mit Leistungskompensation nach Anspruch 8, worin der Probethermowiderstand ($R_s$) gemäß Folgendem berechnet wird:

$$R_s = \frac{\Delta T_{o2} \cdot \dfrac{dT_{s1}}{d\tau} - \Delta T_{o1} \cdot \dfrac{dT_{s2}}{d\tau}}{\dfrac{dT_{s1}}{d\tau} \cdot \left( m_{s2} \cdot C_{sapph} \cdot \dfrac{dT_{s2}}{d\tau} - p_{s2} \right) + \dfrac{dT_{s2}}{d\tau} \cdot \left( p_{s1} - m_{s1} \cdot C_{sapph} \cdot \dfrac{dT_{s1}}{d\tau} \right)}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
Die Tiefzahlen 1 und 2 geben die ersten und zweiten Kalibrierexperimente an.

11. Differentialabtastkalorimeter mit Leistungskompensation nach Anspruch 8, worin die Referenzthermokapazität ($C_r$) gemäß Folgendem berechnet wird:

$$C_r = \frac{(\Delta T_{o1} + \Delta T_1) \cdot \left[ m_{r2} \cdot C_{sapph} \cdot \left( \dfrac{dT_{s2}}{d\tau} - \dfrac{d\Delta T_2}{d\tau} \right) - p_{r2} \right] + (\Delta T_{o2} + \Delta T_2) \cdot \left[ p_{r1} - m_{r1} \cdot C_{sapph} \cdot \left( \dfrac{dT_{s1}}{d\tau} - \dfrac{d\Delta T_1}{d\tau} \right) \right]}{(\Delta T_{o1} + \Delta T_1) \cdot \left( \dfrac{d\Delta T_2}{d\tau} - \dfrac{dT_{s2}}{d\tau} \right) + (\Delta T_{o2} + \Delta T_2) \cdot \left( \dfrac{dT_{s1}}{d\tau} - \dfrac{d\Delta T_1}{d\tau} \right)}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;

Die Tiefzahlen 1 und 2 geben die ersten und zweiten Kalibrierexperimente an.

12. Differentialabtastkalorimeter mit Leistungskompensation nach Anspruch 8, worin der Referenzthermowiderstand ($R_r$) gemäß Folgendem berechnet wird:

$$R_r = \frac{(\Delta T_{o1} + \Delta T_1) \cdot \left( \dfrac{d\Delta T_2}{d\tau} - \dfrac{dT_{s2}}{d\tau} \right) + (\Delta T_{o2} + \Delta T_2) \cdot \left( \dfrac{dT_{s1}}{d\tau} - \dfrac{d\Delta T_1}{d\tau} \right)}{\left( \dfrac{dT_{s1}}{d\tau} - \dfrac{d\Delta T_1}{d\tau} \right) \cdot \left[ m_{r2} \cdot C_{sapph} \cdot \left( \dfrac{dT_{s2}}{d\tau} - \dfrac{d\Delta T_2}{d\tau} \right) - p_{r2} \right] + \left( \dfrac{dT_{s2}}{d\tau} - \dfrac{d\Delta T_2}{d\tau} \right) \cdot \left[ p_{r1} - m_{r1} \cdot C_{sapph} \cdot \left( \dfrac{dT_{s1}}{d\tau} - \dfrac{d\Delta T_1}{d\tau} \right) \right]}$$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;

Die Tiefzahlen 1 und 2 geben die ersten und zweiten Kalibrierexperimente an.

13. Differentialabtastkalorimeter mit Leistungskompensation nach Anspruch 8, worin der Absoluttemperaturdetektor die Probentemperatur $T_s$ misst, der erste Differentialtemperaturdetektor die Differenz zwischen der Probentemperatur und der Temperatur des isothermischen Behältnisses $T_o$ misst und der zweite Differentialtemperaturdetektor die Differenz zwischen der Probentemperatur $T_s$ und der Referenztemperatur $T_r$ misst, und

worin der Differentialwärmestrom zur Probe gemäß Folgendem berechnet wird:

$$ q = \Delta p + \Delta T_o \cdot \left( \frac{R_r - R_s}{R_r \cdot R_s} \right) - \frac{\Delta T}{R_r} + (C_r - C_s) \cdot \frac{dT_s}{d\tau} - C_r \cdot \frac{d\Delta T}{d\tau} $$

wobei gilt

$\Delta T_0$ ist die Temperaturdifferenz zwischen der Temperatur des isothermischen Behältnisses $T_0$ und der Temperatur des Probenhalters $T_s$;
$m_s$ ist die Masse der Saphirprobe;
$C_{sapph}$ ist die bekannte Wärmekapazität der Saphirprobe;
$T_s$, $T_r$ sind die Proben- und Referenztemperaturen;
$p_s$, $p_r$ ist die den Proben- und Referenzhaltern zugeführte Leistung;
$\Delta T$ ist die Temperaturdifferenz zwischen den Proben- und Referenzhaltertemperaturen;
$\Delta p = P_s - P_r$; $R_s$, $R_r$ sind die Thermowiderstände der Probenreferenz; $C_s$, $C_r$ sind die thermischen Kapazitäten der Probenreferenz.

14. Differentialabtastkalorimeter mit Leistungskompensation nach Anspruch 1, worin der Probentemperaturdetektor die Absoluttemperatur misst.

15. Differentialabtastkalorimeter mit Leistungskompensation nach Anspruch 1, worin das Differentialabtastkalorimeter mit Leistungskompensation eine erste Differentialtemperatur zwischen dem Probenhalter und dem Referenzhalter, eine zweite Differentialtemperatur zwischen dem Probenhalter und dem isothermischen Behältnis und eine Differentialleistung zwischen der Probe und der Referenz misst.

16. Differentialabtastkalorimeter mit Leistungskompensation nach Anspruch 15, worin die Differentialleistung zwischen der Probe und der Referenz durch separates Messen der Leistung zum Probenhalter und der Leistung zum Referenzhalter und Berechnen einer Differenz zwischen der Leistung zum Probenhalter und der Leistung zum Referenzhalter gemessen wird.

17. Differentialabtastkalorimeter mit Leistungskompensation nach Anspruch 16, worin die Leistung zum Probenhalter und die Leistung zum Referenzhalter durch Instrumentierung gemessen werden, die Spannungen und Ströme zum Probenheizelement und zum Referenzheizelement misst.

18. Differentialabtastkalorimeter mit Leistungskompensation nach Anspruch 1, worin das isothermische Behältnis gekühlt ist und aus einem hochleitfähigen Material besteht.

19. Differentialabtastkalorimeter mit Leistungskompensation nach Anspruch 1, worin der Probenhalter eine Probenpfanne zum Aufnehmen der Probe enthält und worin der Probenhalter einen Deckel zum Einschließen der Probe innen im Probenhalter aufweist.

20. Differentialabtastkalorimeter mit Leistungskompensation nach Anspruch 1, worin der Referenzhalter eine Referenzpfanne zum Aufnehmen der Referenz enthält und worin der Referenzhalter einen Deckel zum Einschließen der Referenz innen im Referenzhalter aufweist.

21. Differentialabtastkalorimeter mit Leistungskompensation nach Anspruch 1, worin der Differentialwärmestrom zur Probe mit Bezug auf die Referenz mithilfe einer Wärmestromgleichung mit fünf Ausdrücken berechnet wird.

**Revendications**

1. Calorimètre différentiel à balayage à compensation de puissance, comprenant :

   a) une enceinte isothermique (203) ayant un ensemble porte-échantillon (201 s) et un ensemble porte-référence (201 r) installé dans l'enceinte isothermique (203) ;
   b) le porte-échantillon (201s) supporté par une résistance thermique d'échantillon (208s) ayant une faible section transversale dans la direction normale au flux de chaleur vers le porte-échantillon (201 s), le porte-échantillon (201 s) comprenant un détecteur de température d'échantillon (202s) et un élément chauffant d'échantillon, et étant conçu pour recevoir un échantillon, la résistance thermique d'échantillon (208s) étant la voie principale pour l'échange thermique entre le porte-échantillon (201 s) et l'enceinte isothermique (203) ;
   c) le porte-référence (201 r) supporté par une résistance thermique de référence (209r) ayant une faible section transversale dans la direction normale au flux de chaleur vers le porte-référence (201 r), le porte-référence comprenant un détecteur de température de référence (202r) et un élément chauffant de référence, et étant conçu pour recevoir une référence, la résistance thermique de référence (209r) étant la voie principale pour l'échange thermique entre le porte-référence (201 r) et l'enceinte isothermique (203) ; et
   d) un détecteur de température d'enceinte isothermique (210) installée dans le corps de l'enceinte isothermique pour mesurer la température isothermique de ladite enceinte isothermique (203).

2. Calorimètre différentiel à balayage à compensation de puissance selon la revendication 1, **caractérisé en ce que** :

   a) l'un des détecteurs parmi le détecteur de température d'échantillon (202s), le détecteur de température de référence (202r) et le détecteur de température d'enceinte isothermique (210) est utilisé en tant que détecteur de température absolue ;
   b) la différence $(T_0-T_s)$ entre la température d'échantillon et la température d'enceinte isothermique ; la différence $(T_0-T_r)$ entre la température de référence et la température d'enceinte isothermique ; ou la différence $(T_s-T_r)$ entre la température d'échantillon et la température de référence est utilisée en tant que première mesure de température différentielle ;
   c) une autre différence parmi la différence $(T_s-T_r)$ entre la température d'échantillon et la température de référence ; la différence $(T_0-T_s)$ entre la température d'échantillon et la température d'enceinte isothermique ; ou la différence $(T_s-T_r)$ entre la température de référence et la température d'enceinte isothermique est utilisée en tant que seconde mesure de température différentielle ; et comprenant en outre
   d) des compteurs pour mesurer une puissance différentielle vers l'échantillon par rapport à la référence, le calorimètre à compensation de puissance étant étalonné en effectuant une première expérience avec une cellule vide selon un programme de température présélectionné, et en effectuant une seconde expérience avec un spécimen de saphir d'échantillon dans un porte-échantillon et un spécimen de saphir de référence dans un porte-référence, selon le même programme de température présélectionné.

3. Calorimètre différentiel à balayage à compensation de chaleur selon la revendication 2, dans lequel la capacité thermique d'échantillon $(C_s)$ est calculée selon l'expression :

$$C_s = \frac{\Delta T_{o1} \cdot \left( m_{s2} \cdot C_{sapph} \cdot \frac{dT_{s2}}{d\tau} - p_{s2} \right) + \Delta T_{o2} \cdot p_{s1}}{\Delta T_{o2} \cdot \frac{dT_{s1}}{d\tau} - \Delta T_{o1} \cdot \frac{dT_{s2}}{d\tau}}$$

dans laquelle

$\Delta T_0$ est la différence de température entre la température de l'enceinte isothermique $T_0$ et la température du porte-échantillon $T_s$ ;
$m_s$ est la masse de l'échantillon de saphir ;
$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

Les indices numériques 1 et 2 indiquent les première et seconde expériences d'étalonnage.

4. Calorimètre différentiel à balayage à compensation de chaleur selon la revendication 2, dans lequel la résistance thermique d'échantillon ($R_s$) est calculée selon l'expression :

$$R_s = \frac{\Delta T_{o2} \cdot \dfrac{dT_{s1}}{d\tau} - \Delta T_{o1} \cdot \dfrac{dT_{s2}}{d\tau}}{\dfrac{dT_{s1}}{d\tau} \cdot \left( m_{s2} \cdot C_{sapph} \cdot \dfrac{dT_{s2}}{d\tau} - p_{s2} \right) + \dfrac{dT_{s2}}{d\tau} \cdot p_{s1}}$$

dans laquelle

$\Delta T_0$ est la différence de température entre la température de l'enceinte isothermique $T_0$ et la température du porte-échantillon $T_s$ ;

$m_s$ est la masse de l'échantillon de saphir ;

$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

Les indices numériques 1 et 2 indiquent les première et seconde expériences d'étalonnage.

5. Calorimètre différentiel à balayage à compensation de chaleur selon la revendication 2, dans lequel la capacité thermique de référence ($C_r$) est calculée selon l'expression :

$$C_r = \frac{(\Delta T_{o1} + \Delta T_1) \cdot \left[ m_{r2} \cdot C_{sapph} \cdot \left( \dfrac{dT_{s2}}{d\tau} - \dfrac{d\Delta T_2}{d\tau} \right) - p_{r2} \right] + (\Delta T_{o2} + \Delta T_2) \cdot p_{r1}}{(\Delta T_{o1} + \Delta T_1) \cdot \left( \dfrac{d\Delta T_2}{d\tau} - \dfrac{dT_{s2}}{d\tau} \right) + (\Delta T_{o2} + \Delta T_2) \cdot \left( \dfrac{dT_{s1}}{d\tau} - \dfrac{d\Delta T_1}{d\tau} \right)}$$

dans laquelle

$\Delta T_0$ est la différence de température entre la température de l'enceinte isothermique $T_0$ et la température du porte-échantillon $T_s$ ;

$m_s$ est la masse de l'échantillon de saphir ;

$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

Les indices numériques 1 et 2 indiquent les première et seconde expériences d'étalonnage.

6. Calorimètre différentiel à balayage à compensation de chaleur selon la revendication 2, dans lequel la résistance thermique de référence ($R_r$) est calculée selon l'expression :

$$R_r = \frac{(\Delta T_{o1} + \Delta T_1) \cdot \left( \dfrac{d\Delta T_2}{d_r} - \dfrac{dT_{s2}}{d_r} \right) + (\Delta T_{o2} + \Delta T_2) \cdot \left( \dfrac{dT_{s1}}{d_r} - \dfrac{d\Delta T_1}{d_r} \right)}{\left[ m_{r2} \cdot C_{sapph} \cdot \left( \dfrac{dT_{s1}}{d_r} - \dfrac{d\Delta T_1}{d_r} \right) - p_{r2} \right] \cdot \left( \dfrac{dT_{s1}}{d_r} - \dfrac{d\Delta T_1}{d_r} \right) - p_{r1} \cdot \left( \dfrac{d\Delta T_2}{d_r} - \dfrac{dT_{s2}}{d_r} \right)}$$

dans laquelle

$\Delta T_0$ est la différence de température entre la température de l'enceinte isothermique $T_0$ et la température du porte-échantillon $T_s$ ;

$m_s$ est la masse de l'échantillon de saphir ;

$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

Les indices numériques 1 et 2 indiquent les première et seconde expériences d'étalonnage.

7. Calorimètre différentiel à balayage à compensation de chaleur selon la revendication 2, dans lequel le détecteur de température absolue mesure la température d'échantillon ($T_s$), le premier détecteur de température différentielle mesure la différence ($\Delta T_0 = T_0 - TS$) entre la température d'échantillon et la température d'enceinte isothermique, et le second détecteur de température différentielle mesure la différence ($\Delta T = T_s - T_r$) entre la température d'échantillon et la température de référence, et

dans lequel le flux de chaleur différentiel vers l'échantillon est calculé selon l'expression :

$$q = \Delta p + \Delta T_o \cdot \left( \frac{R_r - R_s}{R_r \cdot R_s} \right) - \frac{\Delta T}{R_r} + (C_r - C_s) \cdot \frac{dT_s}{d_r} - C_r \cdot \frac{d\Delta T}{d_r}$$

dans laquelle

$\Delta T_0$ est la différence de température entre la température de l'enceinte isothermique $T_0$ et la température du porte-échantillon $T_s$ ;

$m_s$ est la masse de l'échantillon de saphir ;

$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

$\Delta P = P_s - P_r$ ;

$R_s$ et $R_r$ sont les résistances thermiques des parties échantillon et de référence ;

$C_r$ et $C_s$ sont les capacités thermiques.

8. Calorimètre différentiel à balayage à compensation de puissance selon la revendication 1, **caractérisé en ce que** :

a) l'un des détecteurs parmi le détecteur de température d'échantillon (202s), le détecteur de température de référence (202r) et le détecteur de température d'enceinte isothermique (202t) est utilisé en tant que détecteur de température absolue ;

b) la différence ($T_0 - T_s$) entre la température d'échantillon et la température d'enceinte isothermique ; la différence ($T_0 - T_r$) entre la température de référence et la température d'enceinte isothermique ; ou la différence ($T_s - T_r$) entre la température d'échantillon et la température de référence est utilisée en tant que première mesure de température différentielle ;

c) une autre différence parmi la différence ($T_s - T_r$) entre la température d'échantillon et la température de référence ; la différence ($T_0 - T_s$) entre la température d'échantillon et la température d'enceinte isothermique ; ou la différence ($T_0 - T_r$) entre la température de référence et la température d'enceinte isothermique est utilisée en tant que seconde mesure de température différentielle ; et comprenant en outre

d) des compteurs pour mesurer une puissance différentielle ΔP vers l'échantillon par rapport à la référence,

le calorimètre à compensation de puissance étant étalonné en effectuant une première expérience avec un premier spécimen de saphir d'échantillon dans un porte-échantillon et un premier spécimen de saphir de référence dans un porte-référence selon un programme de température présélectionné, et en effectuant une seconde expérience avec un second spécimen de saphir d'échantillon dans le porte-échantillon et un second spécimen de saphir de référence dans le porte-référence, selon le même programme de température présélectionné, le premier spécimen de saphir d'échantillon ayant une masse sensiblement différente de la masse du second spécimen de saphir d'échantillon.

9. Calorimètre différentiel à balayage à compensation de chaleur selon la revendication 8, dans lequel la capacité thermique d'échantillon ($C_s$) est calculée selon l'expression :

$$C_s = \frac{\Delta T_{o1} \cdot \left( m_{s2} \cdot C_{sapph} \cdot \dfrac{dT_{s2}}{d\tau} - p_{s2} \right) + \Delta T_{o2} \cdot \left( p_{s1} - m_{s1} \cdot C_{sapph} \cdot \dfrac{dT_{s1}}{d\tau} \right)}{\Delta T_{o2} \cdot \dfrac{dT_{s1}}{d\tau} - \Delta T_{o1} \cdot \dfrac{dT_{s2}}{d\tau}}$$

dans laquelle

$\Delta t_0$ est la différence de température entre la température de l'enceinte isothermique $T_0$ et la température du porte-échantillon $T_s$ ;
$m_s$ est la masse de l'échantillon de saphir ;
$C_{sapph}$ est la capacité thermique connue de l'échantillon de saphir ;
$T_s$ et $T_r$ sont les températures d'échantillon et de référence ;
$p_s$ et $p_r$ sont les puissances fournies au porte-échantillon et au porte-référence ;
$\Delta_T$ est la différence de température entre la température du porte-échantillon et la température du porte-référence ;
Les indices numériques 1 et 2 indiquent les première et seconde expériences d'étalonnage.

10. Calorimètre différentiel à balayage à compensation de chaleur selon la revendication 8, dans lequel la résistance thermique d'échantillon ($R_s$) est calculée selon l'expression :

$$R_s = \frac{\Delta T_{o2} \cdot \dfrac{dT_{s1}}{d\tau} - \Delta T_{o1} \cdot \dfrac{dT_{s2}}{d\tau}}{\dfrac{dT_{s1}}{d\tau} \cdot \left( m_{s2} \cdot C_{sapph} \cdot \dfrac{dT_{s2}}{d\tau} - p_{s2} \right) + \dfrac{dT_{s2}}{d\tau} \cdot \left( p_{s1} - m_{s1} \cdot C_{sapph} \cdot \dfrac{dT_{s1}}{d\tau} \right)}$$

dans laquelle

$\Delta T_0$ est la différence de température entre la température de l'enceinte isothermique $T_0$ et la température du porte-échantillon $T_s$ ;
$m_s$ est la masse de l'échantillon de saphir ;
$C_{sapph}$ est la capacité thermique connue de l'échantillon de saphir ;
$T_s$ et $T_r$ sont les températures d'échantillon et de référence ;
$p_s$ et $p_r$ sont les puissances fournies au porte-échantillon et au porte-référence ;
$\Delta_T$ est la différence de température entre la température du porte-échantillon et la température du porte-référence ;
Les indices numériques 1 et 2 indiquent les première et seconde expériences d'étalonnage.

11. Calorimètre différentiel à balayage à compensation de chaleur selon la revendication 8, dans lequel la capacité

thermique de référence ($C_r$) est calculée selon l'expression :

$$C_r = \frac{(\Delta T_{o1} + \Delta T_1) \cdot \left[ m_{r2} \cdot C_{sapph} \cdot \left( \dfrac{dT_{s2}}{d_r} - \dfrac{d\Delta T_2}{d_r} \right) - p_{r2} \right] + (\Delta T_{o2} + \Delta T_2) \cdot \left[ p_{r1} - m_{r1} \cdot C_{saph} \cdot \left( \dfrac{dT_{s1}}{d_r} - \dfrac{d\Delta T_1}{d_r} \right) \right]}{(\Delta T_{o1} + \Delta T_1) \cdot \left( \dfrac{d\Delta T_2}{d_r} - \dfrac{dT_{s2}}{d_r} \right) + (\Delta T_{o2} + \Delta T_2) \cdot \left( \dfrac{dT_{s1}}{d_r} - \dfrac{d\Delta T_1}{d_r} \right)}$$

dans laquelle

$\Delta T_0$ est la différence de température entre la température de l'enceinte isothermique $T_0$ et la température du porte-échantillon $T_s$ ;
$m_s$ est la masse de l'échantillon de saphir ;
$C_{sapph}$ est la capacité thermique connue de l'échantillon de saphir ;
$T_s$ et $T_r$ sont les températures d'échantillon et de référence ;
$p_s$ et $p_r$ sont les puissances fournies au porte-échantillon et au porte-référence ;
$\Delta_T$ est la différence de température entre la température du porte-échantillon et la température du porte-référence ;
Les indices numériques 1 et 2 indiquent les première et seconde expériences d'étalonnage.

12. Calorimètre différentiel à balayage à compensation de chaleur selon la revendication 8, dans lequel la résistance thermique de référence ($R_r$) est calculée selon l'expression :

$$R_r = \frac{(\Delta T_{o1} + \Delta T_1) \cdot \left( \dfrac{d\Delta T_2}{d_r} - \dfrac{dT_{s2}}{d_r} \right) + (\Delta T_{o2} + \Delta T_2) \cdot \left( \dfrac{dT_{s1}}{d_r} - \dfrac{d\Delta T_1}{d_r} \right)}{\left( \dfrac{dT_{s1}}{d_r} - \dfrac{d\Delta T_1}{d_r} \right) \cdot \left[ m_{r2} \cdot C_{sapph} \cdot \left( \dfrac{dT_{s2}}{d_r} - \dfrac{d\Delta T_2}{d_r} \right) - p_{r2} \right] + \left( \dfrac{dT_{s2}}{d_r} - \dfrac{d\Delta T_2}{d_r} \right) \cdot \left[ p_{r1} - m_{r1} \cdot C_{sapph} \cdot \left( \dfrac{dT_{s1}}{d_r} - \dfrac{d\Delta T_1}{d_r} \right) \right]}$$

dans laquelle

$\Delta T_0$ est la différence de température entre la température de l'enceinte isothermique $T_0$ et la température du porte-échantillon $T_s$ ;
$m_s$ est la masse de l'échantillon de saphir ;
$C_{sapph}$ est la capacité thermique connue de l'échantillon de saphir ;
$T_s$ et $T_r$ sont les températures d'échantillon et de référence ;
$p_s$ et $p_r$ sont les puissances fournies au porte-échantillon et au porte-référence ;
$\Delta_T$ est la différence de température entre la température du porte-échantillon et la température du porte-référence ;
Les indices numériques 1 et 2 indiquent les première et seconde expériences d'étalonnage.

13. Calorimètre différentiel à balayage à compensation de chaleur selon la revendication 8,
dans lequel le détecteur de température absolue mesure la température d'échantillon $T_s$, le premier détecteur de température différentielle mesure la différence entre la température d'échantillon et la température d'enceinte isothermique $T_0$, et le second détecteur de température différentielle mesure la différence entre la température d'échantillon $T_s$ et la température de référence $T_r$, et
dans lequel le flux de chaleur différentiel vers l'échantillon est calculé selon l'expression :

$$q = \Delta p + \Delta T_o \cdot \left( \frac{R_r - R_s}{R_r \cdot R_s} \right) - \frac{\Delta T}{R_r} + (C_r - C_s) \cdot \frac{dT_s}{d_r} - C_r \cdot \frac{d\Delta T}{d_r}$$

dans laquelle

$\Delta T_0$ est la différence de température entre la température de l'enceinte isothermique $T_0$ et la température du porte-échantillon $T_s$ ;
$m_s$ est la masse de l'échantillon de saphir ;

$C_{sapph}$ est la capacité thermique connue de l'échantillon de saphir ;

$T_s$ et $T_r$ sont les températures d'échantillon et de référence ;

$p_s$ et $p_r$ sont les puissances fournies au porte-échantillon et au porte-référence ;

$\Delta_T$ est la différence de température entre la température du porte-échantillon et la température du porte-référence ;

$\Delta P = P_s - P_r$ ;

$R_s$ et $R_r$ sont les résistances thermiques de la référence d'échantillon ; $C_r$ et $C_s$ sont les capacités thermiques de la référence d'échantillon.

**14.** Calorimètre différentiel à balayage à compensation de chaleur selon la revendication 1, dans lequel le détecteur de température d'échantillon mesure la température absolue.

**15.** Calorimètre différentiel à balayage à compensation de chaleur selon la revendication 1, le calorimètre différentiel à balayage à compensation de chaleur mesurant une première température différentielle entre le porte-échantillon et le porte-référence, une seconde température différentielle entre le porte-échantillon et l'enceinte isothermique, et une puissance différentielle entre l'échantillon et la référence.

**16.** Calorimètre différentiel à balayage à compensation de chaleur selon la revendication 15, dans lequel la puissance différentielle entre l'échantillon et la référence est mesurée en mesurant séparément la puissance vers le porte-échantillon et la puissance vers le porte-référence, et en calculant une différence entre la puissance vers le porte-échantillon et la puissance vers le porte-référence.

**17.** Calorimètre différentiel à balayage à compensation de chaleur selon la revendication 16, dans lequel la puissance vers le porte-échantillon et la puissance vers le porte-référence sont mesurées au moyen d'une instrumentation qui mesure des tensions et des courants vers l'élément chauffant d'échantillon et l'élément chauffant de référence.

**18.** Calorimètre différentiel à balayage à compensation de chaleur selon la revendication 1, dans lequel l'enceinte isothermique est refroidie et fabriquée dans un matériau fortement conducteur.

**19.** Calorimètre différentiel à balayage à compensation de chaleur selon la revendication 1, dans lequel le porte-échantillon contient un collecteur à échantillon pour recevoir l'échantillon, et dans lequel le porte-échantillon comporte un couvercle enfermant l'échantillon à l'intérieur du porte-échantillon.

**20.** Calorimètre différentiel à balayage à compensation de chaleur selon la revendication 1, dans lequel le porte-référence contient un collecteur de référence pour recevoir la référence, et dans lequel le porte-référence comporte un couvercle enfermant la référence à l'intérieur du porte-référence.

**21.** Calorimètre différentiel à balayage à compensation de chaleur selon la revendication 1, dans lequel le flux de chaleur différentiel vers l'échantillon par rapport à la référence est calculé au moyen d'une équation de flux de chaleur à cinq termes.

**Figure 1**

# Figure 2

EP 1 182 439 B1

FIGURE 3

EP 1 182 439 B1

Figure 4

Figure 5

EP 1 182 439 B1

**EP 1 182 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 64387000 A
- US 64386900 A
- US 76931301 A
- US 3263484 A, Watson and O'Neill
- US 3732722 A, Norem, O'Neill, and Richmond
- US 6431747 B
- US 5439291 A
- US 5711604 A

### Non-patent literature cited in the description

- **G. HÖHNE, W. HEMMINGER ; H. J. FLAMMER-SHEIM.** Differential Scanning Calorimetry: an Introduction for Practitioners. Springer-Verlag, 1996
- **BERNHARD WUNDERLICH.** Thermal Analysis. Academic Press, 1990
- **E. S. WATSON ; M.J. O'NEILL.** A Differential Scanning calorimeter for Quantitative Differential Thermal Analysis. *Analytical Chemestry,* June 1964, vol. 36 (7), 1233-1238
- **M.J. O'NEILL.** The Analysis of a Temperature-Controlled Scanning Calorimeter. *Analytical Chemistry,* June 1964, vol. 36 (7), 1238-1245